(19) Europäisches Patentamt
European Patent Office
Office européen des brevets

(11) **EP 4 480 993 A1**

(12) **EUROPÄISCHE PATENTANMELDUNG**

(43) Veröffentlichungstag:
**25.12.2024   Patentblatt 2024/52**

(21) Anmeldenummer: 23181155.5

(22) Anmeldetag: **23.06.2023**

(51) Internationale Patentklassifikation (IPC):
*C08G 65/26* *(2006.01)*

(52) Gemeinsame Patentklassifikation (CPC):
**C08G 65/2609**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Covestro Deutschland AG**
**51373 Leverkusen (DE)**

(72) Erfinder:
- **Lorenz, Klaus**
  **41539 Dormagen (DE)**
- **Hoffmann, Andreas**
  **50259 Pulheim (DE)**
- **Meyer, Annemarie**
  **50668 Köln (DE)**
- **Braun, Stefanie**
  **51069 Köln (DE)**
- **Kleinig, Frank**
  **41542 Dormagen (DE)**
- **Triacca, Vincent**
  **13820 Ensuès-la-Redonne (FR)**
- **Riou, Jacques**
  **13960 Sausset-les-Pins (FR)**
- **Bouguen, Bernard**
  **13300 Salon-de-Provence (FR)**

(74) Vertreter: **Levpat**
**c/o Covestro AG**
**Gebäude K12**
**51365 Leverkusen (DE)**

(54) **VERFAHREN ZUR HERSTELLUNG EINES POLYOXYALKYLENPOLYOLS**

(57)    Die Erfindung betrifft ein Verfahren zur Herstellung eines Polyoxyalkylenpolyols umfassend Anlagerung eines Alkylenoxids (A) an eine H-funktionelle Startersubstanz (B) in Gegenwart eines basischen Katalysators (C) unter Bildung eines Intermediats (D), gefolgt von einer Vakuumbehandlung des Intermediats (D) bei Drücken von 1 mbara bis 500 mbara unter Bildung eines Intermediats (E). Anschließend wird ein Alkylenoxid (F) an dieses Intermediat (E) unter Bildung eines alkalischen Polyoxyalkylenpolyols (H) angelagert und nachfolgend Wasser unter Bildung einer Mischung (J) umfassend eine erste Phase (J-1) enthaltend das Polyoxyalkylenpolyol und eine zweite, wässrige Phase (J-2) zugegeben. Abschließend wird die zweite, wässrige Phase (J-2) von der ersten Phase (J-1) enthaltend das Polyoxyalkylenpolyol über Gravitation abgetrennt. Hierbei wird die Zugabe des Alkylenoxids (A) zeitlich vor der Vakuumbehandlung beendet und die Zugabe des Alkylenoxids (F) zeitlich erst nach Abschluss der Vakuumbehandlung begonnen. Die Erfindung betrifft auch die Mischung (J) erhältlich nach dem erfindungsgemäßen Verfahren.

EP 4 480 993 A1

**Beschreibung**

Die Erfindung betrifft ein Verfahren zur Herstellung eines Polyoxyalkylenpolyols umfassend die Anlagerung eines Alkylenoxids (A) an eine H-funktionelle Startersubstanz (B) in Gegenwart eines basischen Katalysators (C) unter Bildung eines Intermediats (D), gefolgt von einer Vakuumbehandlung des Intermediats (D) bei Drücken von 1 mbara bis 500 mbara unter Bildung eines Intermediats (E). Anschließend wird ein Alkylenoxid (F) an dieses Intermediat (E) unter Bildung eines alkalischen Polyoxyalkylenpolyols (H) angelagert und nachfolgend Wasser zugegeben unter Bildung einer Mischung (J) umfassend eine erste Phase (J-1) enthaltend das Polyoxyalkylenpolyol und eine zweite, wässrige Phase (J-2). Abschließend wird die zweite, wässrige Phase (J-2) von der ersten Phase (J-1) enthaltend das Polyoxyalkylenpolyol über Gravitation abgetrennt. Hierbei wird die Zugabe des Alkylenoxids (A) zeitlich vor der Vakuumbehandlung beendet und die Zugabe des Alkylenoxids (F) zeitlich erst nach Abschluss der Vakuumbehandlung begonnen. Die Erfindung betrifft auch die Mischung (J) erhältlich nach dem erfindungsgemäßen Verfahren.

In EP 3747929 A1 wird ein Verfahren zur Aufreinigung von Polyetherpolyolen offenbart, wobei in einer ersten Stufe das basische Polyetherpolyol mit einer Säure neutralisiert wird und anschließend die sich ausbildenden Phasen separiert werden.

In DD 144 272 wird ein oder- oder zweistufiges Verfahren zur Herstellung von Polyetherpolyolen, offenbart, wobei der Anteil an ungesättigten monofunktionellen Bestandteilen im resultierenden Polyol deutlich reduziert werden soll.

US 3823145 offenbart ein Verfahren zur Aufreinigung von Polyoxyalkylenetherpolyolen enthaltend wasserlösliche Katalysatorreste, wobei organische Lösungsmittel wie Hexan oder Toluol und weiterhin auch Wasser zu dem Polyoxyalkylenetherrohpolyol enthaltend die wasserlöslichen Katalysatorreste hinzugegeben werden unter Bildung einer ersten organischen Phase enthaltend das organische Lösungsmittel und das Polyetherpolyol und einer zweiten, wässrigen Phase enthaltend die Katalysatorreste. Im Anschluss erfolgt die Phasentrennung sowie die Abtrennung des organischen Lösungsmittels unter Bildung des aufgereinigten Polyoxyalkylenetherpolyols.

Allen Verfahren des Standes der Technik ist gemein, dass sie entweder kompliziert in der Durchführung sind, beispielsweise durch Zugabe von unpolaren Lösungsmitteln zur Unterstützung des Phasentrennprozesses oder die Phasentrennung langsam bzw. nicht ausreichend vollständig erfolgt. Aufgabe der vorliegenden Erfindung war es somit, ein verbessertes Verfahren bereitzustellen, welches die geschilderten Nachteile der Verfahren des Standes der Technik beseitigt und sich insbesondere durch eine verbesserte Abtrennung einer die Katalysatorreste enthaltenden wässrigen Phase von der Polyoxyalkylenpolyolphase auszeichnet. Neben der Steigerung der Verfahrenseffizienz kann hierdurch auch der Gehalt an organischen Verunreinigungen im Abwasser gesenkt werden ohne technisch aufwändige, zusätzliche Filtrationsverfahren durchführen zu müssen.

Daneben soll idealerweise auch auf die Zugabe von organischen Lösungsmitteln während des Aufreinigungsprozesses verzichtet werden, welche unter hohem energetischen Aufwand destillativ vom Polyoxyalkylenpolyol abgetrennt und aufgereinigt werden müssen.

Überraschenderweise konnte die Aufgabe gelöst werden durch ein Verfahren zur Herstellung eines Polyoxyalkylenpolyols, bevorzugt eines Polyetherpolyols umfassend folgende Schritte:

i) Anlagerung eines Alkylenoxids (A) an eine H-funktionelle Startersubstanz (B) in Gegenwart eines basischen Katalysators (C) unter Bildung eines Intermediats (D),

ii) Vakuumbehandlung des Intermediats (D) bei Drücken von 1 mbara bis 500 mbara, bevorzugt von 2 mbara bis 200 mbara, und besonders bevorzugt von 2 mbara bis 50 mbara unter Bildung eines Intermediats (E),

iii) Anlagerung eines Alkylenoxids (F) an das Intermediat (E) optional in Gegenwart eines basischen Katalysators (G) unter Bildung eines alkalischen Polyoxyalkylenpolyols (H), bevorzugt eines alkalischen Polyetherpolyols (H-1),

iv) Optional Vakuumbehandlung des alkalischen Polyoxyalkylenpolyols (H), bevorzugt des alkalischen Polyetherpolyols (H-1) bei Drücken von 1 mbara bis 500 mbara, bevorzugt von 2 mbara bis 200 mbara, und besonders bevorzugt von 2 mbara bis 50 mbara,

v) Zugabe von Wasser und optional einer Säure (I) zu dem alkalischen Polyoxyalkylenpolyol (H), bevorzugt zum alkalischen Polyetherpolyol (H-1) unter Bildung einer Mischung (J) umfassend eine erste Phase (J-1) enthaltend das Polyoxyalkylenpolyol und eine zweite, wässrige Phase (J-2),

vi) Abtrennung der zweiten, wässrigen Phase (J-2) von der ersten Phase (J-1) enthaltend das Polyoxyalkylenpolyol über Gravitation,

wobei die Zugabe des Alkylenoxids (A) in Schritt i) zeitlich vor der Vakuumbehandlung in Schritt ii) beendet wird und die Zugabe des Alkylenoxids (F) zeitlich erst nach Abschluss der Vakuumbehandlung in Schritt ii) beginnt.

Im erfindungsgemäßen Verfahren sind unter Polyoxyalkylenpolyolen Anlagerungsprodukte von einem oder mehreren Alkylenoxiden und optional einem oder mehreren Co-Monomeren wie beispielsweise $CO_2$ und/oder cyclischen Carbonsäureanhydriden und/ oder cyclischen Estern wie Lactonen oder Lactid an eine oder mehrere H-funktionelle Startersubstanz in Gegenwart eines basischen Katalysators (C) und / oder (G) zu verstehen, wobei Polyetherpolyole, Polyetheresterpolyole, Polycarbonatpolyole, Polyethercarbonatpolyole oder Polyetherestercarbonatpolyole, bevorzugt Polyetherpolyole, erhältlich sind.

In einer Ausführungsform der Erfindung weist das Polyoxyalkylenpolyol, bevorzugt das Polyetherpolyol eine Hydroxylzahl von 25 mg KOH/g bis 100 mg KOH/g, bevorzugt 28 mg KOH/g bis 60 mg KOH/g auf, wobei die Hydroxylzahl mittels der im Experimentalteil offenbarten Methode DIN 53240-2 (2007-11) bestimmt wurde.

In einer Ausführungsform der Erfindung weist das Polyoxyalkylenpolyol, bevorzugt das Polyetherpolyol einen molaren Anteil von primären Hydroxylgruppen $\geq$ 50 mol-% bis $\leq$ 100 mol-% auf, wobei der molare Anteil an von primären Hydroxylgruppen mittels NMR-Spektroskopie gemäß der in WO 2021/198054 A1 beschriebenen Methode bestimmt wird.

In einer bevorzugten Ausführungsform des erfindungsgemäßen Verfahrens ist das Polyoxyalkylenpolyol ein Polyetherpolyol, wobei das Polyetherpolyol durch Anlagerung von einem oder mehreren Alkylenoxiden an eine oder mehrere H-funktionelle Startersubstanzen in Gegenwart eines basisches Katalysators (C) und gegebenenfalls eines weiteren Katalysators (G) wie eines oder mehrerer Amine, eines oder mehrerer Alkylimetallhydride oder, besonders bevorzugt, eines oder mehrerer Alkalimetallhydroxide erhältlich ist.

Die nachfolgenden Ausführungsformen der Erfindung, d. h. des erfindungsgemäßen Verfahrens aber auch der nach dem Verfahren erhältlichen Produkte können beliebig miteinander kombiniert werden, es sei denn es ergibt sich aus dem technischen Kontext das Gegenteil.

Das im erfindungsgemäßen Verfahren eingesetzte mindestens eine Alkylenoxid (A) weist 2 bis 24 Kohlenstoffatome auf. Bei den Alkylenoxiden (A) mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester epoxidierter Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltriisopropoxysilan.

Im erfindungsgemäßen Verfahren werden als Alkylenoxid (A) bevorzugt Propylenoxid oder ein Gemisch aus Ethylenoxid und Propylenoxid eingesetzt. Werden Gemische aus Ethylenoxid und Propylenoxid eingesetzt, weisen diese bevorzugt bis zu 75 Massen-% Ethylenoxid, besonders bevorzugt bis zu 50 Massen-% Ethylenoxid und ganz besonders bevorzugt bis zu 30 Massen-% Ethylenoxid, bezogen auf die Gesamtmasse des Gemisches aus Ethylenoxid und Propylenoxid des Alkylenoxids (A), auf. Besonders bevorzugt wird ausschließlich Propylenoxid als Alkylenoxid (A) eingesetzt sowie Gemische aus Ethylenoxid und Propylenoxid mit bis zu 30 Massen-% Ethylenoxid, bezogen auf die Gesamtmasse des Gemisches aus Ethylenoxid und Propylenoxid als Alkylenoxid (A). Die Alkylenoxide (A) können dem Reaktor als Einzelkomponenten oder als Gemisch zugeführt werden. Es ist ebenfalls möglich, aber weniger bevorzugt, mehrere Alkylenoxide (A) dem Reaktor nacheinander zuzuführen, womit sich in Schritt i) Polyoxyalkylenketten mit Blockstruktur realisieren lassen. Bei der Dosierung mehrerer Alkylenoxide (A) ist es zudem möglich, die Zusammensetzung des zugeführten Alkylenoxidstroms kontinuierlich oder instantan zu ändern.

In dem erfindungsgemäßen Verfahren für die Herstellung der Polyoxyalkylenpolyole wird eine oder mehrere H-funktionelle Startersubstanz(en) (B) eingesetzt.

Als geeignete H-funktionelle Startersubstanzen (B), auch Starter genannt, können Verbindungen mit für die Alkoxylierung aktiven H-Atomen, sogenannten "Zerewitinoff-aktiven" Wasserstoffatomen, eingesetzt werden. Ein an N, O, oder S gebundener Wasserstoff wird als Zerewitinoff-aktiver Wasserstoff bezeichnet, wenn er nach einem von Zerewitinoff aufgefundenen Verfahren durch Umsetzung mit Methylmagnesiumjodid Methan liefert. Typische Beispiele für Verbindungen mit Zerewitinoff-aktivem Wasserstoff sind Verbindungen, die Carboxyl-, Hydroxyl,Amino-, Imino- oder Thiol-Gruppen als funktionelle Gruppen enthalten.

Für die Alkoxylierung besonderes geeignete Gruppen mit aktiven H-Atomen sind -OH und -$NH_2$, ganz besonders bevorzugt ist -OH. Als H-funktionelle Startersubstanz können beispielsweise eine oder mehrere Verbindungen ausgewählt werden aus der Gruppe umfassend ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z.B. sogenannte Jeffamine® von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF® der BASF, wie z.B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C 1-C23 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

In einer bevorzugten Ausführungsform des erfindungsgemäßen Verfahrens ist die H-funktionelle Startersubstanz (B) ein Polyol, bevorzugt ein mehrfunktioneller Alkohol, ein mehrfunktionelles Amin, ein Polyetherpolyol, und ein Polyesterpolyol, und besonders bevorzugt ein Polyetherpolyol und/oder ein mehrfunktioneller Alkohol.

Als H-funktionelle Startersubstanzen (B) geeignet sind beispielsweise zweiwertige Alkohole wie Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielsweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielsweise 1,4-Bis-(hydroxymethyl) cyclohexan), Triethylenglykol, Tetraethylenglykol, Polyethylenglykole, Dipropylenglykol, Tripropylenglykol, Polypropylenglykole, Dibutylenglykol und Polybutylenglykole, dreiwertige Alkohole wie beispielweise Trimethylolpropan, Glycerin, Trishydroxyethylisocyanurat, Rizinusöl und Triethanolamin, vierwertige Alkohole wie beispielsweise Pentaerythrit; Polyalkohole wie beispielweise Sorbit, Hexit, Saccharose, Stärke, Stärkehydrolysate (Maltodextrin), Cyclodextrine, Cellulose, Cellulosehydrolysate, hydroxyfunktionalisierte Fette und Öle. Auch Wasser ist als zweiwertige H-funktionelle Startersubstanz (B) zur Durchführung des erfindungsgemäßen Verfahrens geeignet.

Als H-funktionelle Startersubstanzen (B) geeignet sind auch Amine wie beispielsweise Ammoniak, Ethanolamin, Diethanolamin, Isopropanolamin, Diisopropanolamin, Ethylendiamin, Pentamethylendiamin, Hexamethylendiamin, Anilin, die Isomere des Toluidins, die Isomere des Diaminotoluols, die Isomere des Diaminodiphenylmethans sowie bei der Kondensation von Anilin mit Formaldehyd zu Diaminodiphenylmethan anfallende höherkernige Produkte.

Die H-funktionellen Startersubstanzen (B) können auch aus der Substanzklasse der Polyetherpolyole ausgewählt sein, insbesondere aus solchen mit einer zahlenmittleren Molmasse ($M_n$) im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Covestro AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PFT® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen (B) weisen im Allgemeinen eine OH-Funktionalität (d. h. eine Anzahl an für die Polymerisation aktiven H-Atomen pro Molekül) von 1 bis 8, bevorzugt von 2 bis 6 und besonders bevorzugt von 2 bis 4 auf. Die H-funktionellen Startersubstanzen werden entweder einzeln oder als Gemisch aus mindestens zwei H-funktionellen Startersubstanzen eingesetzt.

In einer bevorzugten Ausführungsform des erfindungsgemäßen Verfahrens weisen die H-funktionellen Startersubstanzen (B) Hydroxylzahlen von 150 mg KOH/g bis 6230 mg KOH/g, bevorzugt von 200 mg KOH/g bis 1850 mg KOH/g auf, wobei die Hydroxylzahl mittels im Experimentalteil offenbarten Methode bestimmt wurde.

Erfindungsgemäß werden basische Katalysatoren (C) wie beispielsweise Alkalimetallhydride, Alkalimetallcarboxylate (beispielsweise solche von monofunktionellen Carbonsäuren) Alkalimetallhydroxide oder Amine eingesetzt. Ebenfalls bevorzugt können auch Alkalimetallalkoxylate (beispielsweise solche von mono- oder mehrfunktionellen Alkoholen) verwendet werden. Darüber hinaus werden besonders bevorzugt Alkalimetallalkoxylate mehrfunktioneller Polyoxyalkylenpolyole als Katalysatorträger verwendet.

Letzere können beispielsweise erhalten werden, indem die H-funktionelle Startersubstanz (B) mit einer ersten Teilmenge (A-1), bevorzugt einer kleinen Teilmenge, des Alkylenoxids (A) in einem Schritt i-1) in Gegenwart eines Alkalimetallhydrids, eines Alkalimetallcarboxylats und/oder eines Alkalimetallhydroxids als Ausführungsform eines basischen Katalysators (C), bevorzugt eines Alkalimetallhydroxids, besonders bevorzugt Natriumhydroxid und/oder Kaliumhydroxid, ggf. nach Entwässerung, voralkoxyliert wird und danach ggf. weiteres Alkalimetallhydrid, weiteres Alkalimetallcarboxylat oder, bevorzugt, weiteres Alkalimetallhydroxid (C-1) zugesetzt und ggf. ein weiteres Mal entwässert wird. Die aus einem solchen Schritt i-1) resultierenden Alkalimetallalkoxylate werden dann in Schritt i-2) mit einer zweiten Teilmenge (A-2) des Alkylenoxids (A) unter Bildung des Intermediats (D) umgesetzt.

In einer Ausführungsform des erfindungsgemäßen Verfahrens ist der basische Katalysator (C) ein Alkalimetallhydroxid oder ein Amin, bevorzugt ein Alkalimetallhydroxid.

Eine Übersicht über für das erfindungsgemäße Verfahren als Katalysatoren geeignete Amine ist von M. Ionescu et al. in "Advances in Urethanes Science and Technology", 1998, 14, S. 151-218 gegeben worden. Beispielsweise können N,N-Dimethylbenzylamin, Dimethylaminopropanol, N-Methyldiethanolamin, Trimethylamin, Triethylamin, N,N-Dimethylcyclohexylamin, N-Methylpyrrolidin, N,N,N',N'-Tetramethylethylendiamin, Diazabicyclo[2,2,2]octan, 1,4-Dimethylpiperazin, N-Methylmorpholin, unsubstituiertes Imidazol und / oder alkylsubstituierte Imidazolderivate eingesetzt werden. Besonders bevorzugt werden im erfindungsgemäßen Verfahren als basische Katalysatoren jedoch die bereits erwähnten Alkalimetallhydroxide (wie beispielsweise Natriumhydroxid, Kaliumhydroxid oder Cäsiumhydroxid) eingesetzt. Die Alkalimetallhydroxide können als Feststoff oder als hochkonzentrierte wässrige Lösungen verwendet werden.

Ganz besonders bevorzugt werden im erfindungsgemäßen Verfahren Natriumhydroxid und/oder Kaliumhydroxid als Alkalimetallhydroxid-Katalysatoren verwendet.

Die basischen Katalysatoren (C) werden im Allgemeinen in einer auf die Endproduktmenge (d. h. auf die Menge des herzustellenden Polyoxyalkylenpolyols, bevorzugt des alkalischen Polyoxyalkylenpolyols (H)) bezogenen Menge von 0,004 bis 0,8 Gew.-%, bevorzugt 0,004 bis 0,5 Gew.-% eingesetzt. Werden Alkalimetallalkoxylate, bevorzugt Alkalimetallalkoxylate mehrfunktioneller Polyoxyalkylenpolyole verwendet, so berechnet sich die auf die Endproduktmenge, bevorzugt auf die Menge von alkalischem Polyoxyalkylenpolyol (H) bezogene Katalysatormenge aus der nach Herstellung des Alkalimetallalkoxylats des mehrfunktionellen Polyoxyalkylenpolyols in diesem vorhandenen Menge an Katalysator, also beispielsweise auf die darin enthaltenen Menge an Alkalimetallhydoxid.

Werden Alkalimetallhydroxide als Katalysatoren eingesetzt, so kann das Wasser, welches bei Zugabe der wässrigen Alkalimetallhydroxidlösungen eingetragen wird und das bei der Reaktion der zerewitinoff-aktiven Wasserstoffe der H-funktionellen Verbindung (B) mit dem Alkalimetallhydroxid entstehende Wasser vor Beginn der Zugabe des Alkylenoxides (A) auch durch einen (ggf. vakuumunterstützten) Destillationsschritt abgetrennt werden, um die ggf. unerwünschte Bildung von Polyoxyalkylendiolen infolge der Reaktion des verbliebenden Wassers mit dem Alkylenoxid (A) zu verhindern. Befindet sich unter der mindestens einen H-funktionellen Starterverbindung (B) ein Amin, so kann die Zugabe des Katalysators zum Reaktionsgemisch auch verspätet, d. h. erst nach Zugabe einer gewissen Menge Alkylenoxid zum katalysatorfreien Reaktionsgemisch, erfolgen.

In einer bevorzugten Ausführungsform des erfindungsgemäßen Verfahrens wird der basische Katalysator (C) oder beispielsweise ein Alkalimetallalkoxylat als Resultat der Umsetzung eines Polyols als H-funktionelle Verbindung (B) mit dem Alkylenoxid (A) nach Schritt i) nicht nach diesem Schritt i) abgetrennt, so dass Katalysator (C) oder dessen Umsetzungsprodukt in Schritt iii) ebenfalls katalytisch die Anlagerung eines Alkylenoxids (F) unterstützt. In dieser bevorzugten Ausführungsform kann in aller Regel auf den Zusatz eines von Katalysator (C) verschiedenen Katalysators (G) verzichtet werden.

In einer Ausführungsform des erfindungsgemäßen Verfahrens ist das Intermediat (D) durch Anlagerung des Alkylenoxids (A) an die H-funktionelle Startersubstanz (B) in Gegenwart des basischen Katalysators (C), bevorzugt des Alkalimetallhydroxids oder des Amins, besonders bevorzugt des Alkalimetallhydroxids wie Kaliumhydroxid und/oder Natriumhydroxid, erhältlich. In einer weiteren Ausführungsform des erfindungsgemäßen Verfahrens ist das Intermediat (D) durch Anlagerung des Alkylenoxids (A) an Alkalimetallalkoxylate mehrfunktioneller Polyoxyalkylenpolyole, die zugleich als Katalysatorträger wirken, erhältlich.

Erfindungsgemäß erfolgt die Bildung des Intermediats (E) durch die Vakuumbehandlung des Intermediats (D) bei Drücken von 1 mbara bis 500 mbara, bevorzugt bei Drücken von 2 mbara bis 100 mbara, besonders bevorzugt bei Drücken von 2 bis 50 mbara in Schritt ii).

Für das erfindungsgemäße Verfahren weist das mindestens eine Alkylenoxid (F) 2 bis 24 Kohlenstoffatome auf. Bei den Alkylenoxiden (F) mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltriisopropoxysilan.

In einer bevorzugten Ausführungsform des erfindungsgemäßen Verfahrens ist das Alkylenoxid (F) Ethylenoxid oder ein Gemisch aus Ethylenoxid und Propylenoxid mit mindestens 70 Massen-% Ethylenoxid, bezogen auf die Gesamtmasse des Gemisches aus Ethylenoxid und Propylenoxid des Alkylenoxids (F). In einer besonders bevorzugten Ausführungsform handelt es sich bei Alkylenoxid (F) um Ethylenoxid.

Die Alkylenoxide (F) können dem Reaktor als Einzelkomponenten oder als Gemisch zugeführt werden. Es ist ebenfalls möglich, aber weniger bevorzugt, mehrere Alkylenoxide (F) dem Reaktor nacheinander zuzuführen, womit sich Polyoxyalkylenketten mit Blockstruktur realisieren lassen. Bei der Dosierung mehrerer Alkylenoxide (F) ist es möglich, die Zusammensetzung des zugeführten Alkylenoxidstroms kontinuierlich oder instantan zu ändern.

In einer bevorzugten Ausführungsform des erfindungsgemäßen Verfahrens wird kein weiterer basischer Katalysator (G) in Schritt iii) zugegeben.

In einer weniger bevorzugten Ausführungsform des erfindungsgemäßen Verfahrens wird zusätzlicher basischer Katalysator (G) in Schritt iii) zugegeben.

Bevorzugt werden im erfindungsgemäßen Verfahren basische Katalysatoren (G) wie beispielsweise Alkalimetallhydride, Alkalimetallcarboxylate (beispielsweise solche von monofunktionellen Carbonsäuren), Alkalimetallhydroxide, Alkalimetallalkoxide (beispielsweise solche von monofunktionellen Alkoholen) oder Amine eingesetzt.

In einer Ausführungsform des erfindungsgemäßen Verfahrens ist der basische Katalysator (G) ein Alkalimetallhydroxid oder ein Amin, bevorzugt ein Alkalimetallhydroxid.

Besonders bevorzugt werden im erfindungsgemäßen Verfahren als basische Katalysatoren (G) Alkalimetallhydroxide (wie beispielsweise Natriumhydroxid, Kaliumhydroxid oder Cäsiumhydroxid) oder Amine eingesetzt. Die Alkalimetallhydroxide können als Feststoff oder als hochkonzentrierte wässrige Lösungen verwendet werden.

Ganz besonders bevorzugt werden im erfindungsgemäßen Verfahren Natriumhydroxid und/oder Kaliumhydroxid als Alkalimetallhydroxid-Katalysatoren verwendet.

In einer außerordentlich bevorzugten Ausführungsform des erfindungsgemäßen Verfahrens sind der basische Katalysator (C) und der basische Katalysator (G) identisch. Bevorzugt sind Katalysator (C) und Katalysator (G) basische Katalysatoren (C-1) und (G-1) und besonders bevorzugt Alkalimetallhydroxide.

Erfindungsgemäß erfolgt die Bildung des alkalischen Polyoxyalkylenpolyols (H), bevorzugt des alkalischen Polyetherpolyols (H-1), durch Anlagerung des Alkylenoxids (F) und optional weiterer Co-Monomere an das Intermediat (E), optional in Gegenwart eines basischen Katalysators (G), in Schritt iii) des erfindungsgemäßen Verfahrens.

Ein weiterer Gegenstand der Erfindung ist das alkalische Polyoxyalkylenpolyol (H) erhältlich nach dem erfindungsgemäßen Verfahren.

Erfindungsgemäß erfolgt die Bildung des alkalischen Polyetherpolyols (H-1) durch Anlagerung von einem oder mehreren Alkylenoxiden (F) durch Anlagerung des Alkylenoxids (F) an das Intermediat (E), optional in Gegenwart eines basischen Katalysators (G), in Schritt iii) des erfindungsgemäßen Verfahrens.

Ein weiterer Gegenstand der Erfindung ist das das alkalische Polyetherpolyol (H-1) erhältlich nach dem erfindungsgemäßen Verfahren.

In einer Ausführungsform des erfindungsgemäßen Verfahrens ist die Säure (I) eine Mineralsäure, eine Hydroxycarbonsäure, ein cyclisches Dicarbonsäureanhydrid und/oder eine unvollständig alkoxylierte Oxosäure des Phosphors, bevorzugt handelt es sich bei der Säure (I) um eine Mineralsäure. Alternativ kann für die Neutralisation Kohlenstoffdioxid als Säure (I) verwendet werden.

Bevorzugt werden anorganische Mineralsäuren eingesetzt, besonders bevorzugt Phosphorsäure und / oder Schwefelsäure, wobei Phosphorsäure und / oder Schwefelsäure in einer ganz besonders bevorzugten Ausführungsform als verdünnte, wässrige Phosphorsäure und / oder als verdünnte, wässrige Schwefelsäure eingesetzt werden. In einer alternativen Ausführungsform ist die Säure (I) eine organische Säure, wie beispielsweise Adipinsäure, Ameisensäuren und/oder Essigsäure.

Erfindungsgemäß umfasst die Mischung (J) eine erste Phase (J-1) enthaltend das Polyoxyalkylenpolyol und eine zweite, wässrige Phase (J-2). In einer Ausführungsform des erfindungsgemäßen Verfahrens wird das alkalische Polyoxyalkylenpolyol (H), bevorzugt das alkalische Polyetherpolyol (H-1) durch Zugabe von Wasser und der Säure (I) neutralisiert unter Bildung der Mischung (J) umfassend eine erste Phase (J-1) enthaltend das Polyoxyalkylenpolyol und eine zweite wässrige Phase (J-2) enthaltend ein Neutralisationssalz.

Ein weiterer Gegenstand der Erfindung ist die Mischung (J) umfassend eine erste Phase (J-1) enthaltend das Polyoxyalkylenpolyol und eine zweite, wässrige Phase (J-2), bevorzugt enthaltend das Neutralisationssalz, erhältlich nach dem erfindungsgemäßen Verfahren.

Erfindungsgemäß erfolgt in Schritt i) die Anlagerung des Alkylenoxids (A) an die H-funktionelle Startersubstanz (B) optional in Gegenwart des basischen Katalysators (C) unter Bildung des Intermediats (D).

In einer Ausführungsform des erfindungsgemäßen Verfahrens erfolgt Schritt i) bei einer Temperatur von 70 °C bis 130 °C, bevorzugt von 80 °C bis 115 °C. Die Temperatur kann während der Alkylenoxiddosierphase in Schritt i) innerhalb der beschriebenen Grenzen variiert werden: Um eine optimale Abstimmung zwischen hohem Alkylenoxidumsatz und geringer Nebenproduktbildung bei Verwendung empfindlicher H-funktioneller Verbindungen (B) (Starterverbindungen), wie beispielsweise Saccharose, zu erreichen, kann zunächst bei niedrigen Reaktionstemperaturen in Schritt i) (beispielsweise bei 70 bis 110°C) alkoxyliert werden und erst bei hinreichendem Umsatz der H-funktionellen Startersubstanz (B) (d. h. sobald mindestens 50 Gew.-% der eingesetzten H-funktionellen Startersubstanz (B) an mindestens einem Zerewitinoff-aktiven Wasserstoffatom mit Alkylenoxid reagiert haben) zu höheren Reaktionstemperaturen (beispielsweise auf 110 bis 130 °C) übergegangen werden.

Die Temperatur der exothermen Alkylenoxidadditionsreaktion wird durch Kühlung auf dem gewünschten Niveau gehalten. Gemäß dem Stand der Technik zur Auslegung von Polymerisationsreaktoren für exotherme Reaktionen (z. B. Ullmann's Encyclopedia of Industrial Chemistry, Band B4, Seite 167ff, 5. Ausgabe, 1992) erfolgt eine solche Kühlung im Allgemeinen über die Reaktorwand (z. B. Doppelmantel, Halbrohrschlange) sowie mittels weiterer intern im Reaktor und/oder extern im Umpumpkreislauf angeordneter Wärmetauscherflächen, z.B. an Kühlschlangen, Kühlkerzen, Platten-Rohrbündel- oder Mischerwärmetauschern. Diese sollten vorteilhafterweise so ausgelegt sein, dass auch zu Beginn der Dosierphase, d. h. bei kleinem Füllstand und / oder in Gegenwart eines möglicherweise heterogenen Reaktorinhalts (beispielsweise bei Vorliegen von Feststoffdispersionen oder Suspensionen) effektiv gekühlt werden kann. In einer Ausführungsform des erfindungsgemäßen Verfahrens erfolgt Schritt i) bei einem Druck von 0,001 bara bis 10 bara, bevorzugt von 0,01 bara bis 7 bara.

In einer Ausführungsform des erfindungsgemäßen Verfahrens umfasst Schritt i) folgende Unterschritte:

i-1) Anlagerung einer ersten Teilmenge (A-1) des Alkylenoxids (A) an das Polyetherpolyol und/oder den mehrfunktionellen Alkohol als H-funktioneller Startersubstanz (B) in Gegenwart des Alkalimetallhydrids, des Alkalimetallcarboxylats und/oder des Alkalimetallhydroxids, bevorzugt des Alkalimetallhydroxids, als basischen Katalysators (C) unter Bildung eines Alkalimetallalkoxylats,
i-2) Umsetzung des Alkalimetallalkoxylats mit der einer zweiten Teilmenge (A-2) des Alkylenoxids (A) unter Bildung des Intermediats (D).

In einer Ausführungsform des erfindungsgemäßen Verfahrens beträgt der Stoffmengenanteil n(A-1) der in Schritt i-1) zugegebenen ersten Teilmenge des Alkylenoxids (A-1) von 6 mol-% bis 20 mol-%, bevorzugt von 8 mol-% bis 18 mol-% und besonders bevorzugt von 10 mol-% bis 16 mol-%, bezogen auf die Summe der Stoffmengen der ersten Teilmenge n(A-1) und der zweiten Teilmenge n(A-2).

Hierbei kann zu dem in Schritt i-1) erhaltenden Alkalimetallalkoxylat vor der weiteren Umsetzung in Schritt i-2) noch weiterer basischer Katalysator (C-1) wie Alkalimetallhydrid, Alkalimetallcarboxylat und/oder Alkalimetallhydroxid, bevorzugt Alkalimetallhydroxid, zugegeben werden und optional entwässert werden. Solche Entwässerungsvorgänge werden bevorzugt durchgeführt, indem man das in Schritt i-1) erhaltene und mit weiterem basischen Katalysator C-1 versetzte Alkalimetallalkoxylat bei 80 °C bis 150 °C und 500 mbara bis 1 mbara für 10 min bis 3 h behandelt.

Im erfindungsgemäßen Verfahren wird die Zugabe des Alkylenoxids (A) in Schritt i) zeitlich vor der Vakuumbehandlung in Schritt ii) beendet und die Zugabe des Alkylenoxids (F) wird zeitlich erst nach Abschluss der Vakuumbehandlung in Schritt ii) begonnen.

In einer Ausführungsform des erfindungsgemäßen Verfahrens wird zeitlich nach der Beendigung der Zugabe des Alkylenoxids (A) in Schritt i) und vor der Vakuumbehandlung in Schritt ii) das Intermediat (D) in einer ersten Nachreaktionsphase bei einer Temperatur von 80 °C bis 150 °C, bevorzugt von 80 °C bis 115 °C und einem Druck von 0,01 bara bis 10 bara, bevorzugt von 0,1 bara bis 7 bara behandelt. Die erste Nachreaktionsphase erfolgt hierbei bevorzugt über einen Zeitraum von 20 min bis 300 min, bevorzugt von 50 min. bis 200 min. In dieser ersten Nachreaktionsphase soll die Menge an unreagiertem Alkylenoxid (A) vor der Vakuumbehandlung in Schritt ii) reduziert werden, was zu einer besseren Prozesseffizienz des erfindungsgemäßen Herstellungsverfahrens durch höhere Alkylenoxidumsätze und damit verbunden weniger Alkylenoxidverlusten führt.

In einer bevorzugten Ausführungsform des erfindungsgemäßen Verfahrens kann die erste Nachreaktionsphase bei einer höheren Temperatur als diejenige, bei welcher die Umsetzung in Schritt i) erfolgte, erfolgen. Hierdurch kann die bereits beschriebene Prozesseffizienz weiter erhöht werden.

In einer bevorzugten Ausführungsform des erfindungsgemäßen Verfahrens erfolgt zwischen den Schritten i) und ii) keine Wasserzugabe und/oder Säurezugabe. Eine Wasserzugabe würde den energetischen Aufwand in Schritt ii) erhöhen, denn es müsste nun auch die Verdampfungsenthalpie des eingebrachten Wassers in diesem Schritt aufgebracht werden. Eine Säurezugabe vor Schritt ii) wäre außerdem nicht mit den basischen Katalysatoren C) und ggf. G) kompatibel, da sie durch die Säure deaktiviert werden würden.

Erfindungsgemäß erfolgt in Schritt ii) die Vakuumbehandlung des Intermediats (D) bei Drücken von 1 mbara bis 500 mbara, bevorzugt von 2 mbara bis 200 mbara, und besonders bevorzugt von 2 mbara bis 50 mbara unter Bildung eines Intermediats (E).

In einer Ausführungsform des erfindungsgemäßen Verfahrens wird die Vakuumbehandlung in Schritt ii) bei Temperaturen von 20 °C bis 200 °C, bevorzugt bei 50 °C bis 160°C, besonders bevorzugt bei 100 °C bis 150 °C durchgeführt.

In einer bevorzugten Ausführungsform des erfindungsgemäßen Verfahrens erfolgt Schritt ii) bei einer höheren Temperatur als die Umsetzung in Schritt i).

In einer Ausführungsform des erfindungsgemäßen Verfahrens wird die Vakuumbehandlung in Schritt ii) über einen Zeitraum von 5 min bis 6 h, bevorzugt von 10 min bis 4 h und besonders bevorzugt von 10 min bis 2 h durchgeführt.

In einer Ausführungsform des erfindungsgemäßen Verfahrens erfolgt die die Vakuumbehandlung in Schritt ii) unter Einleiten von Inertgasen und/oder Wasserdampf bevorzugt Stickstoff unter den Flüssigkeitsspiegel in das Intermediat (D).

Unter Inertgasen sind erfindungsgemäß bei den herrschenden Reaktionsbedingungen sehr reaktionsträge Gase wie beispielsweise Stickstoff und Edelgase, bevorzugt Argon und Stickstoff, besonders bevorzugt Stickstoff, zu verstehen.

Der Begriff "unter den Flüssigkeitsspiegel" ist erfindungsgemäß so zu verstehen, dass die Füllhöhe im Reaktor mit Reaktionsgemisch zum fraglichen Zeitpunkt, hier bei Durchführung von Schritt ii), geographisch höher liegt als die Eintrittsöffnung / die Eintrittsöffnungen, durch die das Inertgas in den Reaktor eingeleitet wird. Um einen effizienten Strippvorgang sicherzustellen, beispielsweise auch bei Thrombenbildung während des Rührens, wird empfohlen, die Eintrittsöffnung / die Eintrittsöffnungen für das Inertgas an geeigneter Stelle im Bodenbereich des Reaktors zu positionieren. Inertgase können beispielsweise über Tauchrohre oder Verteilerringe eingeleitet werden.

In einer Ausführungsform des erfindungsgemäßen Verfahrens erfolgt das Einleiten der Inertgase, bevorzugt Stickstoff, und/oder Wasserdampf in Mengen von 1 mL/(min kg (Intermediat (D))) bis 50 mL/(min kg (Intermediat (D))) bevorzugt von 3 mL/(min kg (Intermediat (D))) bis 30 mL/(min kg (Intermediat (D))) unter den Flüssigkeitsspiegel des Intermediats (D).

In einer bevorzugten Ausführungsform des erfindungsgemäßen Verfahrens wird die Vakuumbehandlung in Schritt ii) in demselben Reaktor wie die Schritte i) und iii), optional die Schritte i), iii) und iv) durchgeführt, so dass keine zusätzliche (zeitaufwendige) Überführung des Intermediats (D) nach Schritt i) oder des Intermediats (E) vor Schritt iii) in separate Reaktoren notwendig ist.

In einer weniger bevorzugten Ausführungsform des erfindungsgemäßen Verfahrens wird die Vakuumbehandlung in Schritt ii) in einer Strippkolonne durchgeführt, bevorzugt in einer Strippkolonne, welche Füllkörper oder Einbauten enthält.

Erfindungsgemäß erfolgt in Schritt iii) die Anlagerung des Alkylenoxids (F) an das Intermediat (E) optional in Gegenwart des basischen Katalysators (G) unter Bildung des alkalischen Polyoxyalkylenpolyols (H), bevorzugt des alkalischen Polyetherpolyols (H-1).

In einer Ausführungsform des erfindungsgemäßen Verfahrens erfolgt Schritt iii) bei einer Temperatur von 70 °C bis 170 °C, bevorzugt von 100 °C bis 150 °C. Die Temperatur kann während der Alkylenoxiddosierphase in Schritt iii) innerhalb der beschriebenen Grenzen variiert werden.

In einer Ausführungsform des erfindungsgemäßen Verfahrens erfolgt Schritt iii) bei einem Druck 0,001 bara bis 10 bara, bevorzugt von 0,01 bara bis 7 bara.

Die Alkylenoxide (A) und (F) werden in den Schritten i) und iii) in der gängigen Weise dem Reaktor kontinuierlich derart zugeführt, dass die sicherheitstechnischen Druckgrenzen des verwendeten Reaktorsystems nicht überschritten werden. Insbesondere ist bei der Dosierung von ethylenoxidhaltigen Alkylenoxidgemischen oder reinem Ethylenoxid darauf zu achten, dass ein ausreichender Inertgaspartialdruck im Reaktor während der Anfahr- und Dosierphase aufrechterhalten wird. Dieser kann beispielsweise durch Edelgase oder Stickstoff eingestellt werden. Die Alkylenoxide können dem Reaktor auf unterschiedliche Weise zugeführt werden: Möglich ist eine Dosierung in die Gasphase oder direkt in die Flüssigphase, z. B. über ein Tauchrohr oder einen in der Nähe des Reaktorbodens in einer gut durchmischten Zone befindlichen Verteilerring. Bei Dosierung in die Flüssigphase sollten die Dosieraggregate selbstleerend ausgelegt sein, beispielsweise durch Anbringen der Dosierbohrungen an der Unterseite des Verteilerrings. Vorteilhafterweise kann durch apparative Maßnahmen, beispielsweise durch die Montage von Rückschlagklappen, ein Rückströmen von Reaktionsmedium in die alkylenoxidführenden Leitungen und Dosieraggregate bzw. in die Alkylenoxid-Vorratsbehälter verhindert werden.

In einer bevorzugten Ausführungsform des erfindungsgemäßen Verfahrens wird zeitlich nach der Beendigung der Zugabe des Alkylenoxids (F) in Schritt iii) und vor der bevorzugten Vakuumbehandlung Schritt iv) das alkalische Polyoxyalkylenpolyol (H), bevorzugt das alkalische Polyetherpolyol (H-1) in einer zweiten Nachreaktionsphase bei einer Temperatur von 80 °C bis 170 °C, bevorzugt von 80 °C bis 150 °C und einem Druck von 0,01 bara bis 10 bara, bevorzugt von 0,1 bara bis 7 bara behandelt. Die zweite Nachreaktionsphase erfolgt hierbei bevorzugt über einen Zeitraum von 20 min bis 300 min, bevorzugt von 50 min. bis 200 min. Hierdurch soll die Menge an unreagiertem Alkylenoxid (F) im alkalischen Polyoxyalkylenpolyol (H), bevorzugt im alkalischen Polyetherpolyol (H-1) reduziert werden, was zu einer besseren Prozesseffizienz des erfindungsgemäßen Herstellungsverfahrens durch höhere Alkylenoxidumsätze, aber auch eine Erhöhung der Prozesssicherheit durch weniger nicht umgesetztes (monomeres) Alkylenoxid (F) führt.

In einer Ausführungsform des erfindungsgemäßen Verfahrens wird nach der Beendigung der Zugabe des Alkylenoxids (F) in Schritt iii) und vor der Neutralisation des alkalischen Polyoxyalkylenpolyols (H), bevorzugt des alkalischen Polyetherpolyols (H-1) in Schritt v) das alkalische Polyoxyalkylenpolyol (H), bevorzugt das alkalische Polyetherpolyol (H-1) bei Drücken von 1 mbara bis 500 mbara, bevorzugt von 2 mbara bis 200 mbara, und besonders bevorzugt von 2 mbara bis 50 mbara in Schritt iv) vakuumbehandelt.

In einer Ausführungsform des erfindungsgemäßen Verfahrens wird die Vakuumbehandlung in Schritt iv) bei Temperaturen von 20 °C bis 200 °C, bevorzugt bei 50 °C bis 160 °C, besonders bevorzugt bei 100 °C bis 150 °C durchgeführt.

In einer bevorzugten Ausführungsform des erfindungsgemäßen Verfahrens erfolgt Schritt iv) bei der gleichen Temperatur wie Schritt iii).

In einer Ausführungsform des erfindungsgemäßen Verfahrens wird die Vakuumbehandlung in Schritt iv) über einen Zeitraum von 5 min bis 6 h, bevorzugt für 10 min bis 4 h und besonders bevorzugt für 10 min bis 2 h durchgeführt.

In einer weniger bevorzugten Ausführungsform des erfindungsgemäßen Verfahrens erfolgt die Vakuumbehandlung in Schritt iv) unter Einleiten von Inertgasen und/oder Wasserdampf, bevorzugt Stickstoff unter den Flüssigkeitsspiegel in das alkalische Polyoxyalkylenpolyol (H).

In einer weniger bevorzugten Ausführungsform des erfindungsgemäßen Verfahrens erfolgt das Einleiten der Inertgase, bevorzugt Stickstoff, und/oder Wasserdampf in Mengen von 1 mL/(min kg (alkalisches Polyoxyalkylenpolyol (H)) bis 50 mL/(min kg (alkalisches Polyoxyalkylenpolyol (H)) bevorzugt von 3 mL/((alkalisches Polyoxyalkylenpolyol (H)) bis 30 mL/(min kg (alkalisches Polyoxyalkylenpolyol (H)) unter den Flüssigkeitsspiegel des alkalischen Polyoxyalkylenpolyols (H)).

Ebenfalls in einer weniger bevorzugten Ausführungsform des erfindungsgemäßen Verfahrens wird die Vakuumbehandlung in Schritt iv) in einer Strippkolonne durchgeführt, bevorzugt in einer Strippkolonne, welche Füllkörper oder Einbauten einhält.

Erfindungsgemäß wird in Schritt v) Wasser und optional eine Säure (I) zu dem alkalischen Polyoxyalkylenpolyol (H), bevorzugt dem alkalischen Polyetherpolyol (H-1) gegeben unter Bildung einer Mischung (J) umfassend eine erste Phase (J-1) enthaltend das Polyoxyalkylenpolyol, bevorzugt das Polyetherpolyol und eine zweite, wässrige Phase (J-2)).

In einer Ausführungsform des erfindungsgemäßen Verfahrens wird in Schritt v) das alkalische Polyoxyalkylenpolyol (H), bevorzugt das alkalische Polyetherpolyol (H-1) durch Zugabe von Wasser und der Säure (I) neutralisiert unter Bildung der Mischung (J) umfassend eine erste Phase (J-1) enthaltend das Polyoxyalkylenpolyol, bevorzugt das Polyetherpolyol und eine zweite wässrige Phase (J-2) enthaltend ein Neutralisationssalz.

Beispielsweise kann das alkalische Polyoxyalkylenpolyol (H), bevorzugt das alkalische Polyetherpolyol (H-1) mit wässrigen, verdünnten Mineralsäuren wie Schwefelsäure oder Phosphorsäure oder auch durch Einleitung von Kohlendioxid als Säuren (I) neutralisiert werden.

Im Allgemeinen werden hierbei bei der Verwendung starker anorganischer Mineralsäuren, also solchen mit pKs-Werten kleiner als 2,5, Neutralisationsgrade zwischen 90 und 120 % angestrebt, bevorzugt sind Neutralisationsgrade zwischen 100 und 115 %, ganz besonders bevorzugt sind Neutralisationsgrade zwischen 102 und 112 %.

Unter dem Neutralisationsgrad wird die auf die zu neutralisierende Stoffmenge alkalischen Katalysators bezogene prozentuale Menge zugesetzter Neutralisationsäquivalente (wirksamer Säureäquivalente) verstanden. Dies sei am Beispiel der starken anorganischen Mineralsäuren $H_2SO_4$ und $H_3PO_4$ näher erläutert. Da die Stärke der zweiten Dissoziationsstufe der Schwefelsäure zur Protonierung der durch Hydrolyse der aktiven Alkoholatgruppen entstehenden Alkalimetallhydroxide ausreicht, können pro mol eingesetzter Schwefelsäure 2 mol Alkoholatgruppen neutralisiert werden, pro mol eingesetzter Schwefelsäure stehen also 2 mol Neutralisationsäquivalente zur Verfügung. Somit entspricht ein Neutralisationsgrad von 100 % dem molaren Verhältnis von $H_2SO_4$ / Alkalimetallkatalysator = 0,5. Die schwächere Phosphorsäure kann hingegen nur ein Neutralisationsäquivalent zur Verfügung stellen, daher muss sie äquimolar zur Menge der zu neutralisierenden Alkoholatgruppen eingesetzt werden. Somit entspricht im Falle der Phosphorsäure ein Neutralisationsgrad von 100 % dem äquimolaren Verhältnis $H_3PO_4$ / Alkalimetallkatalysator. Allgemein gilt also im Falle der Neutralisation von Alkalimetallkatalysatoren, z. B. KOH, mit einer Säure S, die pro mol n mol Neutralisationsäquivalente zur Verfügung stellen kann, für den Neutralisationsgrad:

$$\text{Neutralisationsgrad}_{\text{Säure S}} = 100 \text{ x n x Mole [Säure S] / Mole Katalysator} \qquad (1)$$

Die Neutralisationsgrade bei Verwendung von Schwefelsäure oder Phosphorsäure berechnen sich folglich nach den Gleichungen (2) und (3)

$$\text{Neutralisationsgrad}_{\text{Schwefelsäure}} = 200 \text{ x Mole [H}_2\text{SO}_4\text{] / Mole Katalysator} \qquad (2)$$

$$\text{Neutralisationsgrad}_{\text{Phosphorsäure}} = 100 \text{ x Mole [H}_3\text{PO}_4\text{] / Mole Katalysator} \qquad (3)$$

Kohlendioxid ist eine gasförmige, schwache anorganische Säure, es wird daher üblicherweise für seine Verwendung kein Neutralisationsgrad angegeben. Das Kohlendioxid wird in den Strom des alkalischen Polyoxyalkylenpolyols (H), bevorzugt in den des alkalischen Polyetherpolyols (H-1) in stöchiometrischen Verhältnissen $CO_2$ / (mole Katalysator) von etwa 1,5 bis 2,5 eingespeist, eine gute Dispergierung des Kohlendioxids kann dann beispielsweise durch ein in den Gemischstrom integriertes statisches Mischaggregat gewährleistet werden. Ebenfalls durch ein solches sog. "inline-Blending" können natürlich auch Wasser und / oder wässrige Lösungen anorganischer Säuren mit dem Polyoxyalkylenpolyol (H), bevorzugt dem alkalischen Polyetherpolyol (H-1) zum Erhalt der Mischung (J) intensiv in Kontakt gebracht werden. Wasser und / oder wässrige Lösungen anorganischer Säuren wie beispielsweise Phosphorsäure oder Schwefelsäure können natürlich auch in sogenannten Neutralisationskesseln mit dem Polyoxyalkylenpolyol (H), bevorzugt dem alkalischen Polyetherpolyol (H-1) unter Anwendung üblicher Rührbedingungen vermischt werden.

Erfindungsgemäß wird in Schritt vi) die zweite, wässrige Phase (J-2), bevorzugt enthaltend das gebildete Neutralisationssalz von der ersten Phase (J-1) enthaltend das Polyoxyalkylenpolyol über Gravitation abgetrennt.

Solche Phasentrennverfahren zur Trennung der ersten Phase (J-1) von der zweiten Phase (J-2) können durch Zugabe von bevorzugt unpolaren Lösungsmitteln (K) wie Toluol beschleunigt werden. Als hilfreich bei Phasentrennprozessen haben sich auch Zentrifugen erwiesen. Ausnahmen bilden die in EP-A 2028211 und WO-A 2009106244 beschriebenen Polyetherpolyolherstellverfahren für spezielle Polyetherpolyoltypen. Phasentrennverfahren können auch an nicht neutralisierten Intermediaten (H) durchgeführt werden, beispielsweise, indem dem nicht neutralisierten Intermediat (H), d.h. dem Intermediat (H), dem keine Säure (I) zugegeben wurde, eine ausreichend hohe Menge an Wasser zugesetzt, gründlich emulgiert wird und danach die Phasen getrennt werden.

In einer Ausführungsform des erfindungsgemäßen Verfahrens wird in Schritt v) Wasser sowie ein unpolares Lösungsmittel (K) und optional eine Säure (I) zu dem alkalischen Polyoxyalkylenpolyol (H) zugegeben unter Bildung einer Mischung (J) umfassend eine erste Phase (J-1) enthaltend das Polyoxyalkylenpolyol und das unpolare Lösungsmittel (K) und eine zweite, wässrigen Phase (J-2).

Bevorzugt ist dieses unpolare Lösungsmittel (K) eine oder mehrere Verbindungen und wird ausgewählt aus der Gruppe bestehend aus n-Pentan, iso-Pentan, n-Hexan, iso-Hexan, Cyclohexan, n-Heptan, Benzol, Toluol und Xylol, bevorzugt aus der Gruppe bestehend aus Toluol, n-Hexan, n-Heptan und Cyclohexan.

Hierbei beträgt das Volumenverhältnis der Mischung (J) zum unpolaren Lösungsmittel (K) bevorzugt von 1,0 bis 3,0, bevorzugt von 1,0 bis 2,5.

Die Abtrennung über Gravitation macht sich den Dichteunterschied zwischen der (lösungsmittelhaltigen) Polyoxyalkylenpolyolphase und der basen- bzw. neutralisationssalzhaltigen Phase zunutze. Eine solche Abtrennung kann rein passiv erfolgen, beispielsweise indem man das mehrphasige Gemisch über einen hinreichend langen Zeitraum in einem Phasentrennbehälter solange sich selbst überlässt, bis die Trennung der ersten von der zweiten Phase ausreichend weit fortgeschritten ist. Eine solche passive Phasentrennung kann durch sogenannte Koaleszer unterstützt werden. Hierbei wirken Gestricke oder Bündel aus Polymer-, Glas-, Keramik- oder Mineralfasern durch die das mehrphasige Gemisch geleitet wird unterstützend auf den Phasentrennprozess ein. Apparativ aufwändiger aber hocheffizient ist die Unterstützung der Phasentrennung durch Zentrifugen. Solche Geräte sind dem Fachmann bekannt und können auch kontinuierlich betrieben werden. Sie sind in der Lage die Phasentrennung über den Dichteunterschied über eine Vervielfachung der Erdbeschleunigung (auf bis zu ca. 10000 g zu beschleunigen. Bevorzugt sind Zentrifunge, die eine Beschleunigung von 500 - 2000 g erzielen, besonders bevorzugt sind solche mit denen Beschleunigungen von 1000 - 2000 g erreichbar sind.

In einer bevorzugten Ausführungsform des erfindungsgemäßen Verfahrens wird nach dem Schritt vi) in Schritt vii) das Wasser und gegebenenfalls, sofern verwendet, das unpolare Lösungsmittel (L) aus der ersten Phase (J-1) enthaltend das Polyoxyalkylenpolyol abgetrennt. Dies kann über eine vakuumunterstützte Destillation geschehen oder auch unter Zuhilfenahme sogenannter Strippkolonnen durchgeführt werden. In solchen wird dem Produktstrom ein Inertgas- oder Wasserdampfstrom entgegengeleitet. Bevorzugt werden zu diesem Zweck Strippkolonnen mit Füllkörpern oder Einbauten verwendet. Solche Strippvorgänge können auch kontinuierlich durchgeführt werden, indem beispielsweise das nicht gestrippte, noch wasser- und ggf. lösungsmittelhaltige Material in einem Pufferbehälter gesammelt und aus diesem kontinuierlich der Strippkolonne zugeführt wird.

Generell sollte in allen Reaktionsphasen, d.h. während der Durchführung der Schritte i) bis vii), durch Auslegung und Einsatz handelsüblicher Rührorgane für eine gute Durchmischung des Reaktorinhaltes gesorgt werden, wobei hier insbesondere ein- oder mehrstufig angeordnete Rührer oder großflächig über die Füllhöhe wirkende Rührertypen geeignet sind (siehe z. B. Handbuch Apparate; Vulkan-Verlag Essen, 1. Aufl. (1990), S.188 - 208). Technisch besonders relevant ist hierbei eine im Mittel über den gesamten Reaktorinhalt eingetragene Mischleistung, die im Allgemeinen im Bereich von 0,2 bis 5 W/l liegt, mit entsprechend höheren lokalen Leistungseinträgen im Bereich der Rührorgane selbst und ggf. bei niedrigeren Füllständen. Um eine optimale Rührwirkung zu erzielen, können im Reaktor gemäß allgemeinem Stand der Technik Kombinationen aus Stromstörern (z. B. Flach- oder Rohrstromstörer) und Kühlschlangen (oder Kühlkerzen) angeordnet werden, die sich auch über den Behälterboden erstrecken können. Die Rührleistung des Mischaggregates kann während der Dosierphase auch füllstandsabhängig variiert werden, um in kritischen Reaktionsphasen einen besonders hohen Energieeintrag zu gewährleisten. Beispielsweise kann es vorteilhaft sein, feststoffhaltige Dispersionen, die zu Reaktionsbeginn beispielsweise bei der Verwendung von Saccharose vorliegen können, besonders intensiv zu durchmischen. Außerdem sollte insbesondere beim Einsatz fester H-funktioneller Starterverbindungen durch die Wahl des Rühraggregates sichergestellt werden, dass eine ausreichende Dispergierung des Feststoffes im Reaktionsgemisch gewährleistet ist. Bevorzugt werden hier bodengängige Rührstufen sowie besonders zur Suspendierung geeignete Rührorgane eingesetzt. Ferner sollte die Rührergeometrie zur Minderung des Aufschäumens von Reaktionsprodukten beitragen. Das Aufschäumen von Reaktionsgemischen kann beispielsweise nach Ende der Dosierphasen in Schritt i) und iii) und der ersten und zweiten Nachreaktionsphase beobachtet werden, wenn Restalkylenoxide zusätzlich im Vakuum bei absoluten Drücken im Bereich von 1 bis 500 mbar in Schritt ii) und optional in Schritt iv) bevorzugt in Schritt ii) und iv) entfernt werden. Für solche Fälle haben sich Rührorgane als geeignet herausgestellt, die eine kontinuierliche Durchmischung der Flüssigkeitsoberfläche erzielen. Je nach Anforderung weist die Rührwelle ein Bodenlager und gegebenenfalls weitere Stützlager im Behälter auf. Der Antrieb der Rührerwelle kann dabei von oben oder unten erfolgen (mit zentrischer oder exzentrischer Anordnung der Welle).

Alternativ ist es auch möglich, die notwendige Durchmischung ausschließlich mittels eines über einen Wärmetauscher geführten Umpumpkreislaufs zu erzielen oder diesen zusätzlich zum Rühraggregat als weitere Mischkomponente zu betreiben, wobei der Reaktorinhalt nach Bedarf (typischerweise 1 bis 50 mal pro Stunde) umgepumpt wird. Die mittels Umpumpung, beispielsweise über einen außenliegenden Wärmetauscher über diesen oder bei Rückführung in den Reaktor über eine Düse oder Injektor, eingetragene spezifische Mischleistung beläuft sich ebenfalls auf Werte von im Mittel 0,2 bis 5 W/L, wobei diese auf das im Reaktor und den Umpumpkreislauf am Ende der Reaktionsphase befindliche Flüssigkeitsvolumen bezogen ist.

Für die Durchführung des erfindungsgemäßen Verfahrens sind die unterschiedlichsten Reaktortypen geeignet. Vorzugsweise werden zylinderförmige Behälter eingesetzt, welche ein Höhen-/Durchmesserverhältnis von 1:1 bis 10: 1 besitzen. Als Reaktorböden kommen beispielsweise Kugel-, Klöpper-, Flach,- oder Konusböden in Frage.

Nach Ende der Alkylenoxiddosierungen in den Schritten i) und/oder iii) können sich die erste bzw. zweite Nachreaktionsphasen anschließen, in denen die Abnahme der Konzentration an unreagiertem Alkylenoxid durch Überwachung des Drucks quantifiziert werden kann. Das Ende einer solchen Nachreaktionsphase ist erreicht, wenn bei annähernd konstanter Temperatur kein weiterer oder nur noch ein sehr langsamer Druckabfall im Reaktionskessel feststellbar ist. Eine solches Kriterium für das Ende der Nachreaktionszeit kann individuell festgelegt werden. Üblich ist beispielsweise das Erreichen einer Druckabfallrate von 20 mbar pro Stunde bei Drücken im Bereich von ca. 2 bar oder höher. Wird eine solche für die Nachreaktionsdauer festgelegte Druckabfallrate erreicht oder unterschritten, wird empfohlen, die Temperatur auf Werte unter 100 °C, bevorzugt auf Werte unter 80 °C abzusenken, um die Bildung unerwünschter Nebenkomponenten zu unterdrücken. Gegebenenfalls kann das Reaktionsgemisch nach Ende der zweiten Nachreaktionsphase nach Schritt iii) von kleinen Mengen an nicht umgesetzten Alkylenoxiden im Vakuum, beispielsweise bei einem absoluten Druck von 1 bis 500 mbar, oder durch Strippen in Schritt iv) vollständig befreit werden. Durch Strippen werden flüchtige Bestandteile, wie beispielsweise (Rest-)Alkylenoxide, unter Einleiten von Inertgasen und/oder Wasserdampf in die Flüssigphase bei gleichzeitig angelegtem Vakuum (beispielsweise durch Durchleiten von Inertgas bei einem Absolutdruck von 5 bis 500 mbar) entfernt. Das Entfernen flüchtiger Bestandteile, wie beispielsweise nicht umgesetzter Alkylenoxide, entweder im Vakuum oder durch Strippen, erfolgt im Allgemeinen bei Temperaturen von 20 bis 200 °C, bevorzugt bei 50 bis 160 °C und vorzugsweise bei Reaktionstemperatur unter Rühren.

Solche Strippvorgänge können auch in sogenannten Strippkolonnen durchgeführt werden, in denen dem Produktstrom ein Inertgas- oder Wasserdampfstrom entgegengeleitet wird. Bevorzugt werden zu diesem Zweck Strippkolonnen mit Füllkörpern oder Einbauten verwendet. Solche Strippvorgänge können auch kontinuierlich durchgeführt werden, indem beispielsweise das nicht gestrippte Material in einem Pufferbehälter gesammelt und aus diesem kontinuierlich der Strippkolonne zugeführt wird.

Nach Erreichen von Druckkonstanz in der Nachreaktionsphase und ggf. nach Entfernen flüchtiger Bestandteile durch Vakuum und/oder Strippen kann das Produkt aus dem Reaktor abgelassen oder Nachbehandlungsschritten, insbesondere Aufarbeitungsschritten, zugeführt werden.

Es wird empfohlen, die Herstellung des erfindungsgemäßen Polyoxyalkylenpolyols, bevorzugt des erfindungsgemäßen Polyetherpolyols unter Sauerstoffausschluss durchzuführen. Auch für das fertig aufgearbeitete, salzfreie und stabilisierte erfindungsgemäße Polyoxyalkylenpolyol, bevorzugt das erfindungsgemäße Polyetherpolyol wird eine Handhabung und Lagerung unter Sauerstoffausschluss empfohlen. Hierfür geeignete Inertgase sind beispielsweise Edelgase, oder Stickstoff oder Kohlendioxid, besonders geeignet sind Edelgase oder Stickstoff. Durch die Unterbindung von Sauerstoffzutritt lassen sich Produktverfärbungen weitestgehend vermeiden, dies gilt insbesondere bei erhöhten Temperaturen, die im Allgemeinen genutzt werden, um durch Senkung der Produktviskosität die Handhabung der Fertigprodukte zu erleichtern. Darüber hinaus entstehen unter Inertgasatmosphäre auch deutlich weniger Peroxidgruppen, die unter Spaltung der Polyetherketten zur Bildung weiterer niedermolekularer oxidativer Abbauprodukte wie beispielsweise Acetaldehyd, Methanol, Ameisensäure, Ameisensäureester, Aceton und Formaldehyd beitragen. Somit können während der Lagerung der Fertigprodukte Qualitätsminderungen minimiert, der Gehalt an leichtflüchtigen organischen Verbindungen gesenkt und Geruchsbelästigungen sowie gesundheitliche Beeinträchtigungen vermieden werden.

Dem erfindungsgemäßen Polyoxyalkylenpolyol, bevorzugt dem erfindungsgemäßen Polyetherpolyol können ein oder mehrere Antioxidanzmittel (z. B. auf Basis von Phenolderivaten und / oder auf Basis von Aminen) zugesetzt werden. Werden starke Basen wie beispielsweise Alkalimetallhydroxide zur basischen Katalyse der Alkylenoxidaddition an die eingesetzten Starterverbindungen (B) verwendet, so empfiehlt es sich, solche Antioxidanzmittel erst nach Neutralisierung in Schritt v) bzw. nach Abtrennung der Katalysatorreste nach Schritt vi) zuzusetzen, da auf diese Weise Verfärbungen der von Katalysatorresten befreiten erfindungsgemäßen Polyoxyalkylenpolyole, bevorzugt der erfindungsgemäßen Polyetherpolyole vermieden werden können.

Das nach dem erfindungsgemäßen Verfahren erhältliche Polyoxyalkylenpolyol bevorzugt das nach dem erfindungsgemäßen Verfahren erhältliche Polyetherpolyol kann als Ausgangskomponente für die Herstellung von massiven oder geschäumten Polyurethanwerkstoffen und, weniger bevorzugt, auch zum Erhalt von Polyurethanelastomeren eingesetzt werden. Die Polyurethanwerkstoffe und - elastomere können auch Isocyanurat-, Allophanat- und Biuretstruktureinheiten enthalten.

Zur Herstellung dieser Materialien wird

1. das erfindungsgemäße Polyoxyalkylenpolyol, bevorzugt das erfindungsgemäße Polyetherpolyol gegebenenfalls mit weiteren isocyanatreaktiven Komponenten gemischt und mit
2. organische Polyisocyanaten,
3. gegebenenfalls in Gegenwart von einem oder mehreren Treibmitteln,
4. in Gegenwart eines oder mehrerer Katalysatoren
5. gegebenenfalls in Gegenwart anderer Zusatzstoffe wie z. B. Zellstabilisatoren zur Reaktion gebracht.

Dem erfindungsgemäßen Polyoxyalkylenpolyol, bevorzugt dem erfindungsgemäßen Polyetherpolyol kann gegebenenfalls als weitere isocyanatreaktive Komponente ein weiteres Polyoxyalkylenpolyol, ein Polyesterpolyol, ein Polycarbonatpolyol, ein Polyethercarbonatpolyol, ein Polyestercarbonatpolyol, ein Polyetherestercarbonatpolyol und/oder ein niedermolekulares Kettenverlängerungs- und/oder Vernetzungsmittel mit OH-Zahlen bzw. NH-Zahlen von 6 bis 1870 mg KOH/g beigemischt werden.

Hierfür geeignete weitere Polyoxyalkylenpolyole können beispielsweise durch anionische Polymerisation von Alkylenoxiden in Gegenwart von Alkalihydroxiden oder Alkalialkoholaten als Katalysatoren und unter Zusatz mindestens eines Startermoleküls, das 2 bis 8 Zerewitinoff-aktive Wasserstoffatome gebunden enthält, oder durch kationische Polymerisation von Alkylenoxiden in Gegenwart von Bronstedt- oder Lewis-Säuren wie Trifluormethansulfonsäure, Perchlorsäure, Antimonpentachlorid, Bortrifluorid-Etherat, oder Tris(pentafluorphenyl)boran erhalten werden. Geeignete Katalysatoren sind natürlich auch solche vom Doppelmetallcyanidkomplextyp, wie sie beispielsweise in US-A 3 404 109, US-A 3 829 505, US-A 3 941 849, US-A 5 158 922, US-A 5 470 813, EP-A 700 949, EP-A 743 093, EP-A 761 708, WO 97/40086, WO 98/16310 und WO 00/47649 beschrieben sind. Geeignete Alkylenoxide sowie einige geeignete Starterverbindungen sind in vorangegangenen Abschnitten bereits beschrieben worden. Ergänzend zu erwähnen sind beispielsweise Tetrahydrofuran als lewis-sauer polymerisierbarer cyclischer Ether und Wasser als Startermolekül. Die weiteren Polyoxyalkylenpolyole, vorzugsweise Polyoxypropylen-polyoxyethylen-polyole, besitzen vorzugsweise zahlenmittlere Molmassen von 200 bis 8000 Da. Als weitere Polyoxyalkylenpolyole eignen sich ferner polymermodifizierte Polyoxyalkylenpolyole, vorzugsweise Pfropfpolyoxyalkylenpolyole, insbesondere solche auf Styrol- und/oder Acrylnitrilbasis, die durch in-situ Polymerisation von Acrylnitril und / oder Styrol oder vorzugsweise Mischungen aus Styrol und Acrylnitril, z.B. im Gewichtsverhältnis 90:10 bis 10:90. vorzugsweise 70:30 bis 30:70, zweckmäßigerweise in den vorgenannten weiteren Polyoxyalkylenpolyolen hergestellt werden, sowie Polyoxyalkylenpolyol-Dispersionen, die als disperse Phase, üblicherweise in einer Menge von 1 bis 50 Gew.-%, vorzugsweise 2 bis 25 Gew.-%, anorganische Füllstoffe, Polyharnstoffe, Polyhydrazide, tert.-Aminogruppen gebunden enthaltende Polyurethane und/oder Melamin enthalten.

Geeignete Polyesterpolyole können beispielsweise aus organischen Dicarbonsäuren mit 2 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Dodecandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z. B. Dicarbonsäuremono- und/oder -diester von Alkoholen mit 1 bis 4 Kohlenstoffatomen oder Dicarbonsäureanhydride eingesetzt werden.

Vorzugsweise verwendet werden Dicarbonsäuregemische aus Bernstein-, Glutar- und Adipinsäure in Mengenverhältnissen von beispielsweise 20 bis 35 / 40 bis 60 / 20 bis 36 Gew.-Teilen und insbesondere Adipinsäure. Beispiele für zwei- und mehrwertige Alkohole sind Ethandiol, Diethylenglykol, 1,2- bzw. 1,3-Propandiol, Dipropylenglykol, Methyl-1,3-Propandiol, 1,4-Butandiol, 1,5-Pentandiol, 3-Methyl-1,5-pentandiol, 1,6-Hexandiol, Neopentylglykol, 1,10-Decandiol, 1,12-Dodecandiol, Glycerin, Trimethylolpropan und Pentaerythrit. Vorzugsweise verwendet werden 1,2-Ethandiol, Diethylenglykol, 1,4-Butandiol, 1,6-Hexandiol, Glycerin, Trimethylolpropan oder Mischungen aus mindestens zwei der genannten mehrwertigen Alkohole, insbesondere Mischungen aus Ethandiol, 1,4-Butandiol und 1,6-Hexandiol, Glycerin und/oder Trimethylolpropan. Eingesetzt werden können ferner Polyesterpolyole aus Lactonen z.B. ε-Caprolacton oder Hydroxycarbonsäuren, z. B. Hydroxycapronsäure und Hydroxyessigsäure.

Zur Herstellung der Polyesterpolyole können die organischen, aromatischen oder aliphatischen Polycarbonsäuren und/oder Polycarbonsäurederivate und mehrwertigen Alkohole katalysatorfrei oder in Gegenwart von Veresterungskatalysatoren, zweckmäßigerweise in einer Atmosphäre aus Inertgasen, wie z.B. Stickstoff, Helium oder Argon und auch in der Schmelze bei Temperaturen von 150 bis 300°C, vorzugsweise 180 bis 230°C gegebenenfalls unter vermindertem Druck bis zu den gewünschten Säure- und OH-Zahlen, polykondensiert werden. Die Säurezahl ist vorteilhafterweise kleiner als 10, vorzugsweise kleiner als 2,5.

Nach einem bevorzugten Herstellverfahren wird das Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 1 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation von aromatischen oder aliphatischen Carbonsäuren mit mehrwertigen Alkoholen kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Das zum Erhalt einer gewünschten OH-Zahl, Funktionalität und Viskosität zu wählende Verhältnis von Dicarbonsäure(derivat) und mehrwertigem Alkohol und die zu wählende Alkoholfunktionalität kann vom Fachmann in einfacher Weise ermittelt werden.

Geeignete Polycarbonatpolyole sind solche der an sich bekannten Art, die beispielsweise durch Umsetzung von Diolen, wie 1,2-Propandiol, 1,4-Butandiol, 1,6-Hexandiol, Diethylenglykol, Triethylenglykol, Tetraethylenglykol oligo-Tetramethylenglykol und/oder oligo-Hexamethylenglykol mit Diarylcarbonaten und/oder Dialkylcarbonaten, z. B. Diphenylcarbonat, Dimethylcarbonat sowie α-ω-Bischloroformiaten oder Phosgen hergestellt werden können. Die ebenfalls geeigneten Polyethercarbonatpolyole werden durch Copolymerisation cyclischer Epoxide und Kohlendioxid erhalten, vorzugsweise werden solche Copolymerisationen unter hohemDruck durchgeführt und durch Doppelmetallcyanid-(DMC-)Verbindungen katalysiert. Niedermolekulare, vorzugsweise tri- oder tetrafunktionelle Vernetzungsmittel oder difunktionale Kettenverlängerungsmittel können dem erfindungsgemäß einzusetzenden Polyoxyalkylenpolyol bevorzugt dem erfindungsgemäß einzusetzenden Polyetherpolyol zur Modifizierung der mechanischen Eigenschaften, insbesondere der Härte der PUR-Werkstoffe beigemischt werden. Geeignete Vernetzungsmittel, z. B. 3- oder 4-wertige Alkohole und oligomere Polyoxyalkylenpolyole mit einer Funktionalität von 3 bis 4, besitzen üblicherweise Molmassen von 90 bis 300 Da. Geeignete Vernetzungsmittel sind beispielsweise Glycerin, Trimethylolpropan oder Pentaerythrit.

Als Kettenverlängerungsmittel vorzugsweise verwendet werden Alkandiole mit 2 bis 12 Kohlenstoffatomen, z.B. Ethandiol, 1,3-Propandiol, 1,5-Pentandiol, 1,6-Hexandiol, 1,7-Heptandiol, 1,8-Octandiol, 1,9-Nonandiol, 1,10-Decandiol und insbesondere 1,4-Butandiol und Dialkylenglykole mit 4 bis 8 Kohlenstoffatomen, z.B. Diethylengykol und Dipropylengykol. Geeignet sind auch verzweigtkettige und/oder ungesättigte Alkandiole mit üblicherweise nicht mehr als 12 Kohlenstoffatomen, wie z.B. 1,2-Propandiol, 2-Methyl-1,3-Propandiol, 3-Methyl-1,5-pentandiol, 2,2-Dimethyl-1,3-propandiol, 2-Butyl-2-ethyl-1,3-propandiol, 2-Buten-1,4-diol und 2-Butin-1,4-diol, Diester der Terephthalsäure mit Glykolen mit 2 bis 4 Kohlenstoffatomen, wie z.B. Terephthalsäurebis-ethylenglykolester oder Terephthalsäure-bis-1,4-butylenglykolester und Hydroxyalkylenether des Hydrochinons oder Resorcins, z.B. 1,4-Di-(β-hydroxyethyl)-hydrochinon oder 1,3-(β-Hydroxyethyl)-resorcin. Auch können Alkanolamine mit 2 bis 12 Kohlenstoffatomen wie Ethanolamin, 2-Aminopropanol und 3-Amino-2,2-dimethylpropanol, N-Alkyldialkanolamine, z.B. N-Methyl- und N-Ethyl-diethanolamin, (cyclo)aliphatische Diamine mit 2 bis 15 Kohlenstoffatomen, wie 1,2-Ethylendiamin, 1,3-Propylendiamin, 1,4-Butylendiamin und 1,6-Hexamethylendiamin, Isophorondiamin, 1,4-Cyclohexamethylendiamin und 4,4'-Diaminodicyclohexylmethan, N-Alkyl-, N,N'-dialkylsubstituierte und aromatische Diamine, die auch am aromatischen Rest durch Alkylgruppen substituiert sein können, mit 1 bis 20, vorzugsweise 1 bis 4 Kohlenstoffatomen im N-Alkylrest, wie N,N'-Diethyl-, N,N'-Disec.-pentyl-, N,N'-Di-sec.-hexyl-, N,N'-Di-sec.-decyl- und N,N'-Dicyclohexyl-, p- bzw. m-Phenylendiamin, N,N'-Dimethyl-, N,N'-Diethyl-, N,N'-Diisopropyl-, N,N'-Di-sec.butyl-, N,N'-Dicyclohexyl-4,4'-diamino-diphenylmethan, N,N'-Disec.-butylbenzidin, Methylen-bis(4-amino-3-benzoesäuremethylester), 2,4-Chlor-4,4'-diamino-diphenylmethan, 2,4- und 2,6-Toluylendiamin verwendet werden.

Verwendbar sind auch Gemische unterschiedlicher Kettenverlängerungs- und Vernetzungsmittel untereinander sowie Gemische aus Kettenverlängerungs- und Vernetzungsmitteln.

Geeignete organische Polyisocyanate sind cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel Q(NCO)n in der n = 2-4, vorzugsweise 2, und Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, oder einen aralipliatischen Kohlenwasserstoffrest mit 8-15, vorzugsweise 8-13 C-Atomen, bedeuten. Geeignet sind z.B. Ethylendiisocyanat, 1,4-Tetramethylendiisocyanat, 1,6-Hexamethylendiisocyanat (HDI), 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-tri-methyl-5-isocyanatomethyl-cyclohexan (DE-B 1 202 785, US-A 3 401 190), 2,4- und 2,6-Hexahydrotoluylendiisocyanat sowie beliebige Gemische dieser Isomeren, Hexahydro-1,3- und -1,4-phenylen-diisocyanat, Perhydro-2,4'- und -4,4'-diphenyl-methan-diisocyanat, 1,3- und 1,4-Phenylendiisocyanat (DE-A 196 27 907), 1,4-Duroldiisocyanat (DDI), 4,4'-Stilbendiisocyanat (DE-A 196 28 145), 3,3'-Dimethyl-4,4'-biphenylendiisocyanat (DIBDI) (DE-A 195 09 819) 2,4- und 2,6-Toluylendiisocyanat (TDI) sowie beliebige Gemische dieser Isomeren, Diphenylmethan-2,4'-diisocyanat und/oder Diphenylmethan-4,4'-diisocyanat (MDI) oder Naphthylen-1,5-diisocyanat (NDI).

Ferner kommen beispielsweise erfindungsgemäß in Frage: Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in GB-A 874 430 und GB-A 848 671 beschrieben werden, m- und p-Isocyanatophenylsulfonylisocyanate gemäß US-A 3 454 606, perchlorierte Arylpolyisocyanate, wie sie in US-A 3 277 138 beschrieben werden, Carbodiimidgruppen aufweisende Polyisocyanate, wie sie in US-A 3 152 162 sowie in DE-A 25 04 400, 25 37 685 und 25 52 350 beschrieben werden, Norbornan-diisocyanate gemäß US-A 3 492 301, Allophanatgruppen aufweisende Polyisocyanate, wie sie in GB-A 994 890, der BE-B 761 626 und NL-A 7 102 524 beschrieben werden, Isocyanuratgruppen aufweisende Polyisocyanate, wie sie in US-A 3 001 9731, in DE-C 10 22 789, 12 22 067 und 1 027 394 sowie in DE-A 1 929 034 und 2 004 048 beschrieben werden, Urethangruppen aufweisende Polyisocyanate, wie sie z.B. in der BE-B 752 261 oder in US-A 3 394 164 und 3 644 457 beschrieben werden, acylierte Harnstoffgruppen aufweisende Polyisocyanate gemäß DE-C 1 230 778, Biuretgruppen aufweisende Polyisocyanate, wie sie in US-A 3 124 605, 3 201 372 und 3 124 605 sowie in GB-B 889 050 beschrieben werden, durch Telomerisationsreaktionen hergestellte Polyisocyanate, wie sie in US-A 3 654 106 beschrieben werden, Estergruppen aufweisende Polyisocyanate, wie sie in GB-B 965 474 und 1 072 956, in USA 3 567 763 und in DE-C 12 31 688 genannt werden, Umsetzungsprodukte der obengenannten Isocyanate mit Acetalen gemäß DE-C 1 072 385 und polymere Fettsäureester enthaltende Polyisocyanate gemäß US-A 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt eingesetzt werden die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("Roh-MDI") und Carbodiimidgruppen, Urethangrupppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Gut geeignet sind auch Naphthylen-1,5-diisocyanat und Gemische der genannten Polyisocyanate.

Es können auch Isocyanatgruppen aufweisende Prepolymere verwendet werden, die erhältlich sind durch Umsetzung einer Teil- oder der Gesamtmenge der erfindungsgemäß einzusetzenden Polyetheresterpolyole und / oder einer Teil- oder der Gesamtmenge der den erfindungsgemäß einzusetzenden Polyetheresterpolyolen ggf. beizumischenden, oben beschriebenen isocyanatreaktiven Komponenten mit mindestens einem aromatischen Di- oder Polyisocyanat aus der Gruppe TDI, MDI, DIBDI, NDI, DDI, vorzugsweise mit 4,4'-MDI und/oder 2,4-TDI und/oder 1,5-NDI zu einem Urethangruppen, vorzugsweise Urethangruppen und Isocyanatgruppen aufweisenden Polyadditionsprodukt. Solche Polyadditionsprodukte weisen NCO-Gehalte von 0,05 bis 40,0 Gew.-% auf. Nach einer bevorzugt angewandten Ausführungsform werden die Isocyanatgruppen enthaltenden Prepolymere hergestellt durch Umsetzung von ausschließlich höhermolekularen Polyhydroxylverbindungen, also dem erfindungsgemäß einzusetzenden Polyoxyalkylenpolyol, und / oder Polyetheresterpolyolen, Polyetherpolyolen, Polyesterpolyolen oder Polycarbonatpolyolen mit den Polyisocyanaten, vorzugsweise 4,4'-MDI, 2,4-TDI und/oder 1,5-NDI.

Die Isocyanatgruppen aufweisenden Prepolymere können in Gegenwart von Katalysatoren hergestellt werden. Es ist jedoch auch möglich, die Isocyanatgruppen aufweisenden Prepolymere in Abwesenheit von Katalysatoren herzustellen und diese der Reaktionsmischung zur Herstellung der PUR-Werkstoffe zuzufügen.

Als gegebenenfalls einzusetzendes Treibmittel kann Wasser verwendet werden, das mit den organischen Polyisocyanaten oder mit den Isocyanatgruppen aufweisenden Prepolymeren in situ unter Bildung von Kohlendioxid und Aminogruppen reagiert, die ihrerseits mit weiteren Isocyanatgruppen zu Harnstoffgruppen weiterreagieren und hierbei als Kettenverlängerungsmittel wirken. Wird, um die gewünschte Dichte einzustellen, der Polyurethanformulierung Wasser zugegeben, wird dieses üblicherweise in Mengen von 0,001 bis 6,0 Gew.-%, bezogen auf das Gewicht der Komponenten 1, 4 und 5 verwendet.

Als Treibmittel können anstelle von Wasser oder vorzugsweise in Kombination mit Wasser auch Gase oder leicht flüchtige anorganische oder organische Substanzen, die unter dem Einfluß der exothermen Polyadditionsreaktion verdampfen und vorteilhafterweise einen Siedepunkt unter Normaldruck im Bereich von -40 bis 120°C, vorzugsweise von 10 bis 90 °C besitzen, als physikalische Treibmittel eingesetzt werden. Als organische Treibmittel können z.B. Aceton, Ethylacetat, Methylacetat, halogensubstituierte Alkane wie Methylenchlorid, Chloroform, Ethylidenchlorid, Vinylidenchlorid, Monofluortrichlormethan, Chlordifluormethan, Dichlordifluormethan, HFKWs wie R 134a, R 245fa und R 365mfc, teilhalogenierte Olefine (sogenannte HFOs oder HCFOs) wie trans-1,3,3,3-Tetrafluorpropen oder trans-1-Chlor-3,3,3-trifluorpropen, ferner unsubstituierte Alkane wie Butan, n-Pentan, Isopentan, Cyclopentan, Hexan, Heptan oder Diethylether verwendet werden. Diese Treibmittel können auch als Gemische verwendet werden. Als anorganische Treibmittel kommen z.B. Luft, COz oder $N_2O$ in Frage. Eine Treibwirkung kann auch erzielt werden durch Zusatz von Verbindungen, die sich bei Temperaturen oberhalb Raumtemperatur unter Abspaltung von Gasen, beispielsweise von Stickstoff und/oder Kohlendioxid, zersetzen wie Azoverbindungen, z.B. Azodicarbonamid oder Azoisobuttersäurenitril, oder Salzen wie Ammoniumbicarbonat, Ammoniumcarbamat oder Ammoniumsalzen organischer Carbonsäuren, z.B. der Monoammoniumsalze der Malonsäure, Borsäure, Ameisensäure oder Essigsäure.

Weitere Beispiele für Treibmittel, Einzelheiten über die Verwendung von Treibmitteln und Kriterien für die Treibmittelwahl sind in R. Vieweg, A. Höchtlen (Hrsg.): "Kunststoff-Handbuch", Band VII, Carl-Hanser-Verlag, München 1966, S. 108f, 453ff und 507-510 sowie in D. Randall, S. Lee (Hrsg.): "The Polyurethanes Book", John Wiley & Sons, Ltd., London 2002, S. 127 - 136, S 232 - 233 und S. 261 beschrieben.

Die zweckmäßig einzusetzende Menge an festen Treibmitteln, niedrigsiedenden Flüssigkeiten oder Gasen, die jeweils einzeln oder in Form von Mischungen, z. B. als Flüssigkeits- oder Gasmischungen oder als Gas-Flüssigkeitsmischungen eingesetzt werden können, hängt ab von der angestrebten PUR-Werkstoffdichte und der eingesetzten Wassermenge. Die erforderlichen Mengen können experimentell leicht ermittelt werden. Zufriedenstellende Ergebnisse liefern üblicherweise Feststoffmengen von 0,5 bis 35 Gew.-Teilen, vorzugsweise 2 bis 15 Gew.-Teilen, Flüssigkeitsmengen von 1 bis 30 Gew.-Teilen, vorzugsweise von 3 bis 18 Gew.-Teilen und/oder Gasmengen von 0,01 bis 80 Gew.-Teilen, vorzugsweise von 10 bis 35 Gew.-Teilen, jeweils bezogen auf das Gewicht der Aufbaukomponenten 1 und 2 Die Gasbeladung mit z. B. Luft, Kohlendioxid, Stickstoff und/oder Helium kann entweder über die Formulierungskomponenten 1, 4 und 5 oder über die Polyisocyanate 2 bzw. über 1, 4, 5 einerseits und 2 andererseits erfolgen.

Als Komponente 4 können dem Fachmann geläufige Aminkatalysatoren eingesetzt werden, z.B. tertiäre Amine wie Triethylamin, Tributylamin, N-Methyl-morpholin, N-Ethyl-morpholin, N,N,N',N'-Tetramethyl-ethylendiamin, Pentamethyl-diethylen-triamin und höhere Homologe (DE-OS 26 24 527 und 26 24 528), 1,4-Diaza-bicyclo-(2,2,2)-octan, N-Methyl-N'-dimethylaminoethyl-piperazin, Bis-(dimethylaminoalkyl)-piperazine (DE-A 26 36 787), N,N-Dimethylbenzylamin, N,N-Dimethylcyclohexylamin, N,N-Diethylbenzylamin, Bis-(N,N-diethylaminoethyl)adipat, N,N,N',N'-Tetramethyl-1,3-butandiamin, N,N-Dimethyl-β-phenyl-ethyl-amin, Bis-(dimethylaminopropyl)-harnstoff, 1,2-Dimethylimidazol, 2-Methylimidazol, monocyclische und bicyclische Amidine (DE-A 17 20 633), Bis-(dialkylamino)-alkylether (US-A 3 330 782, DE-B 10 30 558, DE-A 18 04 361 und 26 18 280) sowie Amidgruppen (vorzugsweise Formamidgruppen) aufweisende tertiäre Amine gemäß DE-A 25 23 633 und 27 32 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol oder alkylsubstituierten Phenolen, in Frage. Gegenüber Isocyanatgruppen aktive Wasserstoffatome aufweisende tertiäre Amine als Katalysator sind z.B. Triethanolamin, Triisopropanolamin, N-Methyl-diethanolamin, N-Ethyl-diethanolamin, N,N-Dimethyl-ethanolamin, deren Umsetzungsprodukte mit Alkylenoxiden wie Propylenoxid und/oder Ethylenoxid sowie sekundärtertiäre Amine gemäß DE-A 27 32 292. Als Katalysatoren können ferner Silaamine mit Kohlenstoff-Silizium-Bindungen, wie sie in US-A 3 620 984 beschrieben sind, eingesetzt werden, z.B. 2,2,4-Trimethyl-2-silamorpholin und 1,3-Diethyl-aminomethyl-tetramethyl-disiloxan. Weiterhin kommen auch stickstoffhaltige Basen wie Tetraalkylammoniumhydroxide, ferner Hexahydrotriazine in Betracht. Die Reaktion zwischen NCO-Gruppen und zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet.

Werden für die Katalyse der Polyurethanreaktion Amine als Katalysatoren eingesetzt, so ist natürlich zu beachten, dass unter Amin-Katalyse hergestellte erfindungsgemäße Polyoxyalkylenpolyole und/oder ein optional weiteres zur Polyurethanreaktion verwendetes Polyoxyalkylenpolyol bereits gegebenenfalls katalytisch aktive Amine enthalten. Durch geeignete Versuchsreihen ist es dem Fachmann jedoch leicht möglich, die Mengen gegebenenfalls noch zuzusetzender Aminkatalysatoren zu ermitteln.

Des Weiteren können als Katalysatoren für diesen Zweck übliche organische Metallverbindungen eingesetzt werden, vorzugsweise organische Zinnverbindungen wie Zinn-(II)-Salze von organischen Carbonsäuren, z. B. Zinn-(II)-acetat, Zinn-(II)-octoat, Zinn-(II)-ethylhexoat und Zinn-(II)-Taurat und, weniger bevorzugt, die Dialkylzinn-(IV)-salze von Mineralsäuren oder organischen Carbonsäuren, z. B. Dibutylzinndiacetat, Dibutylzinndilaurat, Dibutylzinnmaleat, Dioctylzinndiacetat und Dibutylzinndichlorid. Daneben können auch schwefelhaltige Verbindungen wie Di-n-octyl-zinn-mercaptid (US-A 3 645 927) Verwendung finden.

Katalysatoren, welche die Trimerisierung von NCO-Gruppen in besonderer Weise katalysieren, werden zur Herstellung von Polyurethanwerkstoffen mit hohen Anteilen an so genannten Poly(isocyanurat)strukturen ("PIR-Schaumstoffe") eingesetzt. Üblicherweise kommen für die Herstellung solcher Materialien Rezepturen mit signifikanten Überschüssen von NCO-Gruppen gegenüber OH-Gruppen zur Anwendung. PIR-Schaumstoffe werden üblicherweise bei Kennzahlen von 180 bis 450 hergestellt, wobei die Kennzahl als das mit dem Faktor 100 multiplizierte Verhältnis von Isocyanatgruppen zu Hydroxygruppen definiert ist. Katalysatoren, die zur Ausprägung von Isocyanuratstrukturen beitragen, sind Metallsalze wie beispielsweise Kalium-oder Natriumacetat, Natriumoctoat und Aminoverbindungen wie 1,3,5-Tris(3-dimethylaminopropyl)hexahydrotriazin.

Die Katalysatoren bzw. Katalysatorkombinationen werden in der Regel in einer Menge zwischen etwa 0,001 und 10 Gew.-%, insbesondere 0,01 bis 4 Gew.-% bezogen auf die Gesamtmenge an Verbindungen mit mindestens zwei gegenüber Isocyanaten reaktionsfähigen Wasserstoffatomen eingesetzt.

In Abwesenheit von Feuchtigkeit und physikalisch oder chemisch wirkenden Treibmitteln können auch kompakte PUR-Werkstoffe hergestellt werden.

Bei der Herstellung der kompakten oder geschäumten PUR-Werkstoffe können gegebenenfalls Zusatzstoffe 5 mitverwendet werden. Genannt seien beispielsweise oberflächenaktive Zusatzstoffe, wie Emulgatoren, Schaumstabilisatoren, Zellregler, Flammschutzmittel, Keimbildungsmittel, Oxidationsverzögerer, Stabilisatoren, Gleit- und Entformungsmittel, Farbstoffe, Dispergierhilfen und Pigmente. Als Emulgatoren kommen z.B. die Natriumsalze von Ricinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden. Als Schaumstabilisatoren kommen vor allem Polyethersiloxane, in Frage. Diese Verbindungen sind im Allgemeinen so aufgebaut, dass Copolymerisate aus Ethylenoxid und Propylenoxid mit einem Polydimethylsiloxanrest verbunden sind. Derartige Schaumstabilisatoren können gegenüber Isocyanaten reaktiv sein oder durch Veretherung der endständigen OH-Gruppen gegenüber Isocyanaten unreaktiv sein. Sie sind z.B. in US-A 2 834 748, 2 917 480 und 3 629 308 beschrieben. Allgemeine Strukturen solcher Schaumstabilisatoren sind in G. Oertel (Hrsg.): "Kunststoff-Handbuch", Band VII, Carl-Hanser-Verlag, München, Wien 1993, S. 113 - 115 wiedergegeben. Von besonderem Interesse sind vielfach über Allophanatgruppen verzweigte Polysiloxan-Polyoxyalkylen-Copolymere gemäß DE-A 25 58 523. Geeignet sind auch andere Organopolysiloxane, oxyethylierte Alkylphenole, oxyethylierte Fettalkohole und Paraffinöle, und Zellregler wie Paraffine, Fettalkohole und Dimethylpolysiloxane. Zur Verbesserung der Emulgierwirkung, der Dispergierung des Füllstoffs, der Zellstruktur und/oder zu deren Stabilisierung eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente 1 angewandt. Zugesetzt werden können auch Reaktionsverzögerer z.B. sauer reagierende Stoffe wie Salzsäure, oder organische Säuren und Säurehalogenide, sowie Pigmente oder Farbstoffe und an sich bekannte Flammschutzmittel, z.B. Tris-(chlorethyl)phosphat, Trikresylphosphat oder Ammoniumphosphat und -polyphosphat, ferner Stabilisatoren gegen Alterungs- und Witterungseinflüsse, Weichmacher und fungizid und bakterizid wirkende Substanzen. Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind in R. Vieweg, A. Höchtlen (Hrsg.): "Kunststoff-Handbuch", Band VII, Carl-Hanser-Verlag, München 1966, S.103-113 beschrieben.

Zur Herstellung der PUR- bzw. PIR-Werkstoffe kann das Mengenverhältnis der Isocyanatgruppen in den Polyisocyanaten 2. zu den gegenüber den Isocyanaten reaktiven Wasserstoffen in den Komponenten 1, 3, 4 und 5 stark variiert werden. Üblich sind Verhältnisse von 0,7:1 bis 5:1.

Die PUR-, bzw. PIR-Werkstoffe können nach den in der Literatur beschriebenen Verfahren, z.B. dem one-shot- oder dem Prepolymer-Verfahren, mit Hilfe von dem Fachmann im Prinzip bekannten Mischvorrichtungen hergestellt werden. Das nach dem erfindungsgemäßen Verfahren besonders vorteilhaft herstellbare Polyoxyalkylenpolyol, bevorzugt das Polyetherpolyol kann mit einem Polyisocyanat und ggf. zu verwendenden physikalischen Treibmitteln unter Einsatz der üblichen Niederdruck- bzw Hochdruckverarbeitungsmaschinen insbesondere zu weichen Polyurethanschaumstoffen, die beispielsweise Einsatz finden bei der Herstellung von Automobilsitzen, Polstermöbeln und Matratzen, verarbeitet werden. Das erfindungsgemäße Polyoxyalkylenpolyol, bevorzugt das Polyetherpolyol kann hierbei dem maschinellen Mischaggregat entweder als Einzelkomponente oder als Bestandteil einer vorab hergestellten Formulierung zugeführt werden.

Als besonders vorteilhaft für die maschinelle Verarbeitung der erfindungsgemäßen Polyoxyalkylenpolyole, bevorzugt der erfindungsgemäßen Polyetherpolyole erweist sich hierbei ihre niedrige Viskosität.

In einer ersten Ausführungsform betrifft die Erfindung ein Verfahren zur Herstellung eines Polyoxyalkylenpolyols, bevorzugt eines Polyetherpolyols umfassend folgende Schritte:

i) Anlagerung eines Alkylenoxids (A) an eine H-funktionelle Startersubstanz (B) in Gegenwart eines basischen Katalysators (C) unter Bildung eines Intermediats (D),

ii) Vakuumbehandlung des Intermediats (D) bei Drücken von 1 mbara bis 500 mbara, bevorzugt von 2 mbara bis 200 mbara, und besonders bevorzugt von 2 mbara bis 50 mbara unter Bildung eines Intermediats (E),

iii) Anlagerung eines Alkylenoxids (F) an das Intermediat (E) optional in Gegenwart eines basischen Katalysators (G) unter Bildung eines alkalischen Polyoxyalkylenpolyols (H), bevorzugt eines alkalischen Polyetherpolyols (H-1),

iv) Optional Vakuumbehandlung des alkalischen Polyoxyalkylenpolyols (H), bevorzugt des alkalischen Polyetherpolyols (H-1) bei Drücken von 1 mbara bis 500 mbara, bevorzugt von 2 mbara bis 200 mbara, und besonders bevorzugt von 2 mbara bis 50 mbara,

v) Zugabe von Wasser und optional einer Säure (I) zu dem alkalischen Polyoxyalkylenpolyol (H), bevorzugt zum alkalischen Polyetherpolyol (H-1) unter Bildung einer Mischung (J) umfassend eine erste Phase (J-1) enthaltend das Polyoxyalkylenpolyol und eine zweite, wässrige Phase (J-2),

vi) Abtrennung der zweiten, wässrigen Phase (J-2) von der ersten Phase (J-1) enthaltend das Polyoxyalkylenpolyol über Gravitation,

wobei die Zugabe des Alkylenoxids (A) in Schritt i) zeitlich vor der Vakuumbehandlung in Schritt ii) beendet wird und die Zugabe des Alkylenoxids (F) zeitlich erst nach Abschluss der Vakuumbehandlung in Schritt ii) beginnt.

In einer zweiten Ausführungsform betrifft die Erfindung ein Verfahren gemäß der ersten Ausführungsform, wobei das Polyoxyalkylenpolyol, bevorzugt das Polyetherpolyol eine Hydroxylzahl von 25 mg KOH/g bis 100 mg KOH/g, bevorzugt 28 mg KOH/g bis 60 mg KOH/g aufweist, wobei die Hydroxylzahl mittels der im Experimentalteil offenbarten Methode DIN 53240-2 (2007-11) bestimmt wurde.

In einer dritten Ausführungsform betrifft die Erfindung ein Verfahren gemäß der ersten oder zweiten Ausführungsform, wobei das Polyoxyalkylenpolyol, bevorzugt das Polyetherpolyol einen molaren Anteil von primären Hydroxylgruppen ≥ 50 mol-% bis ≤ 100 mol-% aufweist, wobei der molare Anteil an von primären Hydroxylgruppen mittels NMR-Spektroskopie gemäß der in WO 2021/198054 A1 beschriebenen Methode bestimmt wird.

In einer vierten Ausführungsform betrifft die Erfindung ein Verfahren gemäß einer der ersten bis dritten Ausführungsform, wobei das Alkylenoxid (A) Propylenoxid oder ein Gemisch aus Ethylenoxid und Propylenoxid mit bis zu 30 Massen-% Ethylenoxid bezogen auf die Gesamtmasse des Gemisches aus Ethylenoxid und Propylenoxid des Alkylenoxids (A) ist.

In einer fünften Ausführungsform betrifft die Erfindung ein Verfahren gemäß einer der ersten bis vierten Ausführungsform, wobei die H-funktionelle Startersubstanz (B) ein Polyol, bevorzugt ein mehrfunktioneller Alkohol, ein mehrfunktionelles Amin, ein Polyetherpolyol, und ein Polyetheresterpolyol, und besonders bevorzugt ein Polyetherpolyol und/oder ein mehrfunktioneller Alkohol ist.

In einer sechsten Ausführungsform betrifft die Erfindung ein Verfahren gemäß einer der ersten bis fünften Ausführungsform, wobei die H-funktionellen Startersubstanzen (B) Hydroxylzahlen von 150 mg KOH/g bis 6230 mg KOH/g, bevorzugt von 200 mg KOH/g bis 1850 mg KOH/g aufweisen, wobei die Hydroxylzahl mittels im Experimentalteil offenbarten Methode bestimmt wurde.

In einer siebten Ausführungsform betrifft die Erfindung ein Verfahren gemäß einer der ersten bis sechsten Ausführungsform, wobei der basische Katalysator (C) ein Alkalimetallhydroxid bevorzugt Natriumhydroxid und/oder Kaliumhydroxid ist.

In einer achten Ausführungsform betrifft die Erfindung ein Verfahren gemäß der siebten Ausführungsform, wobei der basische Katalysator (C) in einer auf die Endproduktmenge bezogenen Menge von 0,004 bis 0,8 Gew.-%, bevorzugt 0,004 bis 0,5 Gew.-% eingesetzt wird.

In einer neunten Ausführungsform betrifft die Erfindung ein Verfahren gemäß einer der ersten bis achten Ausführungsform, wobei das Alkylenoxid (F) Ethylenoxid oder ein Gemisch aus Ethylenoxid und Propylenoxid mit mindestens 70 Massen-% Ethylenoxid bezogen auf die Gesamtmasse des Gemisches aus Ethylenoxid und Propylenoxid des Alkylenoxids (F) ist.

In einer zehnten Ausführungsform betrifft die Erfindung ein Verfahren gemäß einer der ersten bis neunten Ausführungsform, wobei kein weiterer basischer Katalysator (G) in Schritt iii) zugegeben wird.

In einer elften Ausführungsform betrifft die Erfindung ein Verfahren gemäß einer der ersten bis zehnten Ausführungsform, wobei der basische Katalysator (C) und der basische Katalysator (G) identisch sind.

In einer zwölften Ausführungsform betrifft die Erfindung ein Verfahren gemäß einer der ersten bis elften Ausführungsform, wobei der Katalysator (C) und Katalysator (G) basische Katalysatoren (C-1) und (G-1), bevorzugt Alkalimetallhydroxide sind.

In dreizehnten Ausführungsform betrifft die Erfindung ein Verfahren gemäß einer der ersten bis zwölften Ausführungsform, wobei die Säure (I) eine Mineralsäure, eine Hydroxycarbonsäure, ein cyclisches Dicarbonsäureanhydrid, Kohlenstoffdioxid und/oder eine unvollständig alkoxylierte Oxosäure des Phosphors, bevorzugt eine Mineralsäure ist.

In einer vierzehnten Ausführungsform betrifft die Erfindung ein Verfahren gemäß einer der ersten bis dreizehnten Ausführungsform, wobei die Säure (I) Phosphorsäure und / oder Schwefelsäure, bevorzugt verdünnte, wässrige Phosphorsäure und / oder verdünnte, wässrige Schwefelsäure ist.

In einer fünfzehnten Ausführungsform betrifft die Erfindung ein Verfahren gemäß einer der ersten bis vierzehnten Ausführungsform, wobei die Säure (I) eine organische Säure, bevorzugt Adipinsäure, Ameisensäuren und/oder Essigsäure ist.

In einer sechzehnten Ausführungsform betrifft die Erfindung ein Verfahren gemäß einer der ersten bis fünfzehnten Ausführungsform, wobei Schritt i) bei einer Temperatur von 70 °C bis 130 °C, bevorzugt von 80 °C bis 115 °C erfolgt.

In einer siebzehnten Ausführungsform betrifft die Erfindung ein Verfahren gemäß einer der ersten bis sechzehnten Ausführungsform, wobei Schritt i) bei einem Druck von 0,001 bara bis 10 bara, bevorzugt von 0,01 bara bis 7 bara erfolgt.

In einer achtzehnten Ausführungsform betrifft die Erfindung ein Verfahren gemäß einer der ersten bis siebzehnten Ausführungsform, wobei Schritt i) folgende Unterschritte umfasst:

i-1) Anlagerung einer ersten Teilmenge (A-1) des Alkylenoxids (A) an das Polyetherpolyol und/oder den mehrfunktioneller Alkohol als H-funktionelle Startersubstanz (B) in Gegenwart des Alkalimetallhydrids, des Alkalimetallcarboxylats und/oder des Alkalimetallhydroxids, bevorzugt des Alkalimetallhydroxids als basischem Katalysator (C) unter Bildung eines Alkalimetallalkoxylats,

i-2) Umsetzung des Alkalimetallalkoxylats mit der einer zweiten Teilmenge (A-2) des Alkylenoxids (A) unter Bildung des Intermediats (D).

In einer neunzehnten Ausführungsform betrifft die Erfindung ein Verfahren gemäß der achtzehnten Ausführungsform, wobei der Stoffmengenanteil n(A-1) der in Schritt i-1) zugegebenen ersten Teilmenge des Alkylenoxids (A-1) von 6 mol-% bis 20 mol-%, bevorzugt von 8 mol-% bis 18 mol-% und besonders bevorzugt von 10 mol-% bis 16 mol-% beträgt, bezogen auf die Summe der Stoffmengen der ersten Teilmenge n(A-1) und der zweiten Teilmenge n(A-2).

In einer zwanzigsten Ausführungsform betrifft die Erfindung ein Verfahren gemäß der achtzehnten oder neunzehnten Ausführungsform, wobei zu dem in Schritt i-1) erhaltenden Alkalimetallalkoxylat vor der weiteren Umsetzung in Schritt i-2) noch weiterer basischer Katalysator (C-1) wie Alkalimetallhydrid, Alkalimetallcarboxylat und/oder Alkalimetallhydroxid, bevorzugt Alkalimetallhydroxid zugegeben und optional entwässert wird

In einer einundzwanzigsten Ausführungsform betrifft die Erfindung ein Verfahren gemäß der zwanzigsten Ausführungsform, wobei die Entwässerung des in Schritt i-1) erhaltenen und mit weiterem basischen Katalysator C-1 versetzte Alkalimetallalkoxylat bei 80 °C bis 150 °C und 500 mbara bis 1 mbara für 10 min bis 3 h erfolgt.

In einer zweiundzwanzigsten Ausführungsform betrifft die Erfindung ein Verfahren gemäß einer der ersten bis einundzwanzigsten Ausführungsform, wobei zwischen den Schritten i) und ii) keine Wasserzugabe und/oder Säurezugabe erfolgt.

In einer dreiundzwanzigsten Ausführungsform betrifft die Erfindung ein Verfahren gemäß einer der ersten bis zweiundzwanzigsten Ausführungsform, wobei nach der Beendigung der Zugabe des Alkylenoxids (A) in Schritt i) und vor der Vakuumbehandlung in Schritt ii) das Intermediat (D) bei einer Temperatur bei einer Temperatur von 80 °C bis 150 °C, bevorzugt von 80 °C bis 115 °C und einem Druck von 0,01 bara bis 10 bara, bevorzugt von 0,1 bara bis 7 bara in einer ersten Nachreaktionsphase behandelt wird.

In einer vierundzwanzigsten Ausführungsform betrifft die Erfindung ein Verfahren gemäß der dreiundzwanzigsten Ausführungsform, wobei die erste Nachreaktionsphase über einen Zeitraum von 20 min bis 300 min, bevorzugt von 50 min. bis 200 min erfolgt.

In einer fünfundzwanzigsten Ausführungsform betrifft die Erfindung ein Verfahren gemäß der dreiundzwanzigsten oder vierundzwanzigsten Ausführungsform, wobei die erste Nachreaktionsphase bei einer höheren Temperatur als diejenige, bei welcher die Umsetzung in Schritt i) erfolgte, erfolgt.

In einer sechsundzwanzigsten Ausführungsform betrifft die Erfindung ein Verfahren gemäß einer der ersten bis fünfundzwanzigsten Ausführungsform, wobei die Vakuumbehandlung in Schritt ii) bei Temperaturen von 20 bis 200 °C, bevorzugt bei 50 bis 160 °C, besonders bevorzugt bei 100°C bis 150°C durchgeführt wird.

In einer siebenundzwanzigsten Ausführungsform betrifft die Erfindung ein Verfahren gemäß einer der ersten bis sechsundzwanzigsten Ausführungsform, wobei die Vakuumbehandlung in Schritt ii) über einen Zeitraum von 5 min bis 6 h, bevorzugt von 10 min bis 4 h und besonders bevorzugt von 10 min bis 2 h durchgeführt wird.

In einer achtundzwanzigsten Ausführungsform betrifft die Erfindung ein Verfahren gemäß einer der ersten bis siebenundzwanzigsten Ausführungsform, wobei die Vakuumbehandlung in Schritt ii) unter Einleiten von Inertgasen und/oder Wasserdampf, bevorzugt Stickstoff unter den Flüssigkeitsspiegel in das Intermediat (D) erfolgt.

In einer neunundzwanzigsten Ausführungsform betrifft die Erfindung ein Verfahren gemäß einer der ersten bis achtundzwanzigsten Ausführungsform, wobei das Einleiten der Inertgase und/oder Wasserdampf, bevorzugt Stickstoff, in Mengen von 1 mL/(min kg (Intermediat (D))) bis 50 mL/(min kg (Intermediat (D))) bevorzugt von 3 mL/(min kg (Intermediat (D))) bis 30 mL/(min kg (Intermediat (D))) unter den Flüssigkeitsspiegel des Intermediats (D) erfolgt.

In einer dreißigsten Ausführungsform betrifft die Erfindung ein Verfahren gemäß einer der ersten bis neunundzwanzigsten Ausführungsform, wobei die Vakuumbehandlung in Schritt ii) in demselben Reaktor wie die Schritte i) und iii), optional die Schritte i), iii) und iv) durchgeführt wird.

In einer einunddreißigsten Ausführungsform betrifft die Erfindung ein Verfahren gemäß einer der ersten bis neunundzwanzigsten Ausführungsform, wobei die Vakuumbehandlung in Schritt ii) in einer Strippkolonne durchgeführt wird, bevorzugt in einer Strippkolonne, welche Füllkörper oder Einbauten enthält.

In einer zweiunddreißigsten Ausführungsform betrifft die Erfindung ein Verfahren gemäß einer der ersten bis einunddreißigsten Ausführungsform, wobei Schritt iii) bei einer Temperatur von 70 °C bis 170 °C, bevorzugt von 100 °C bis 150 °C erfolgt.

In einer dreiunddreißigsten Ausführungsform betrifft die Erfindung ein Verfahren gemäß einer der ersten bis zweiunddreißigsten Ausführungsform, wobei Schritt iii) bei einem Druck 0,001 bara bis 10 bara, bevorzugt von 0,01 bara bis 7 bara erfolgt.

In einer vierunddreißigsten Ausführungsform betrifft die Erfindung ein Verfahren gemäß einer der ersten bis dreiunddreißigsten Ausführungsform, wobei nach der Beendigung der Zugabe des Alkylenoxids (F) in Schritt iii) das alkalische Polyoxyalkylenpolyol (H), bevorzugt das alkalische Polyetherpolyol (H-1) bei einer Temperatur von 80 °C bis 170 °C, bevorzugt von 80 °C bis 150 °C und einem Druck von 0,01 bara bis 10 bara, bevorzugt von 0,1 bara bis 7 bara in einer zweiten Nachreaktionsphase behandelt wird.

In einer fünfunddreißigsten Ausführungsform betrifft die Erfindung ein Verfahren gemäß der vierunddreißigsten Ausführungsform, wobei die zweite Nachreaktionsphase über einen Zeitraum von 20 min bis 300 min, bevorzugt von 50 min bis 200 min erfolgt.

In einer sechsunddreißigsten Ausführungsform betrifft die Erfindung ein Verfahren gemäß einer der ersten bis fünfunddreißigsten Ausführungsform, wobei nach der Beendigung der Zugabe des Alkylenoxids (F) in Schritt iii) und vor der Wasserzugabe und der optionalen Neutralisation des alkalischen Polyoxyalkylenpolyols (H), bevorzugt des alkalischen Polyetherpolyols (H-1) in Schritt v) das alkalische Polyoxyalkylenpolyol (H), bevorzugt das alkalische Polyetherpolyol (H-1) bei Drücken von 1 mbara bis 500 mbara, bevorzugt von 2 mbara bis 200 mbara, und besonders bevorzugt von 2 mbara bis 50 mbara in Schritt iv) vakuumbehandelt wird.

In einer siebenunddreißigsten Ausführungsform betrifft die Erfindung ein Verfahren gemäß der sechsunddreißigsten Ausführungsform, wobei die Vakuumbehandlung in Schritt iv) bei Temperaturen von 20 °C bis 200 °C, bevorzugt bei 50 °C bis 160 °C, besonders bevorzugt bei 100 °C bis 150 °C durchgeführt wird.

In einer achtunddreißigsten Ausführungsform betrifft die Erfindung ein Verfahren gemäß einer der ersten bis siebendreißigsten Ausführungsform, wobei Schritt iv) bei der gleichen Temperatur wie Schritt iii) erfolgt.

In einer neununddreißigsten Ausführungsform betrifft die Erfindung ein Verfahren gemäß einer der ersten bis achtunddreißigsten Ausführungsform, wobei die Vakuumbehandlung in Schritt iv) über einen Zeitraum von 5 min bis 6 h, bevorzugt für 10 min bis 4 h und besonders bevorzugt für 10 min bis 2 h durchgeführt wird.

In einer vierzigsten Ausführungsform betrifft die Erfindung ein Verfahren gemäß einer der ersten bis neununddreißigsten Ausführungsform, wobei die die Vakuumbehandlung in Schritt iv) unter Einleiten von Inertgasen und/oder Wasserdampf, bevorzugt Stickstoff unter den Flüssigkeitsspiegel in das alkalische Polyoxyalkylenpolyol (H) erfolgt.

In einer einundvierzigsten Ausführungsform betrifft die Erfindung ein Verfahren gemäß der ersten bis vierzigsten Ausführungsform, wobei das Einleiten der Inertgase, bevorzugt Stickstoff, und/oder Wasserdampf in Mengen von 1 mL/(min kg (alkalisches Polyoxyalkylenpolyol (H)) bis 50 mL/(min kg (alkalisches Polyoxyalkylenpolyol (H)), bevorzugt von 3 mL/((alkalisches Polyoxyalkylenpolyol (H)) bis 30 mL/(min kg (alkalisches Polyoxyalkylenpolyol (H)) unter den Flüssigkeitsspiegel des alkalischen Polyoxyalkylenpolyols (H)) erfolgt.

In einer zweiundvierzigsten Ausführungsform betrifft die Erfindung ein Verfahren gemäß einer der ersten bis einundvierzigsten Ausführungsform, wobei in Schritt v) das alkalische Polyoxyalkylenpolyol (H), bevorzugt das alkalische Polyetherpolyol (H-1) durch Zugabe von Wasser und der Säure (I) neutralisiert wird unter Bildung der Mischung (J) umfassend die erste Phase (J-1) enthaltend das Polyoxyalkylenpolyol und eine zweite wässrige Phase (J-2) enthaltend ein Neutralisationssalz.

In einer dreiundvierzigsten Ausführungsform betrifft die Erfindung ein Verfahren gemäß der zweiundvierzigsten Ausführungsform, wobei das alkalische Polyoxyalkylenpolyol (H), bevorzugt das alkalische Polyetherpolyol (H-1) mit wässrigen, verdünnten Mineral¬säuren wie Schwefelsäure oder Phosphorsäure oder auch durch Einleitung von Kohlendioxid als Säuren (I) neutra¬li¬siert wird.

In einer vierundvierzigsten Ausführungsform betrifft die Erfindung ein Verfahren gemäß einer der ersten bis dreiundvierzigsten Ausführungsform, wobei in Schritt v) Wasser sowie ein unpolares Lösungsmittel (K) und optional eine Säure (I) zu dem alkalischen Polyoxyalkylenpolyol (H) zugegeben wird unter Bildung einer Mischung (J) umfassend eine erste Phase (J-1) enthaltend das Polyoxyalkylenpolyol und das unpolare Lösungsmittel (K) und eine zweite, wässrigen Phase (J-2).

In einer fünfundvierzigsten Ausführungsform betrifft die Erfindung ein Verfahren gemäß der vierundvierzigsten Ausführungsform, wobei unpolare Lösungsmittel (K) eine oder mehrere Verbindungen ist und ausgewählt wird aus der Gruppe bestehend aus n-Pentan, iso-Pentan, n-Hexan, iso-Hexan, Cyclohexan, n-Heptan, Benzol, Toluol und Xylol, bevorzugt aus der Gruppe bestehend aus Toluol, n-Hexan, n-Heptan und Cyclohexan.

In einer sechsundvierzigsten Ausführungsform betrifft die Erfindung ein Verfahren gemäß der vierundvierzigsten oder fünfundvierzigsten Ausführungsform, wobei das Volumenverhältnis der Mischung (J) zum unpolaren Lösungsmittel (K) bevorzugt von 1,0 bis 3,0, bevorzugt von 1,0 bis 2,5 beträgt.

In einer siebenundvierzigsten Ausführungsform betrifft die Erfindung ein Verfahren gemäß einer der ersten bis sechsundvierzigsten Ausführungsform, wobei die Abtrennung in Schritt vi) über einen Koaleszer erfolgt.

In einer achtundvierzigsten Ausführungsform betrifft die Erfindung ein Verfahren gemäß einer der ersten bis sechsundvierzigsten Ausführungsform, wobei die Abtrennung in Schritt vi) über eine Zentrifuge erfolgt.

In einer neunundvierzigsten Ausführungsform betrifft die Erfindung ein Verfahren gemäß einer der ersten bis achtundvierzigsten Ausführungsform, wobei nach dem Schritt vi) in Schritt vii) das Wasser aus der ersten Phase (J-1) enthaltend das Polyoxyalkylenpolyol abgetrennt wird.

In einer fünfzigsten Ausführungsform betrifft die Erfindung ein Verfahren gemäß der neunundvierzigsten Ausführungsform, wobei die Abtrennung mittels vakuumunterstützter Destillation oder unter Verwendung einer Strippkolonne erfolgt.

In einer einundfünfzigsten Ausführungsform betrifft die Erfindung ein Verfahren gemäß der fünfzigsten Ausführungsform, wobei die Strippkolonne Füllkörper oder Einbauten enthält.

In einer zweiundfünfzigsten Ausführungsform betrifft die Erfindung eine Mischung (J) umfassend eine erste Phase (J-1) enthaltend das Polyoxyalkylenpolyol und eine zweite, wässrige Phase (J-2), bevorzugt enthaltend ein Neutralisationssalz erhältlich nach dem Verfahren gemäß einer der ersten bis einundfünfzigsten Ausführungsform.

Beispiele

Methoden:

Die Bestimmung der OH-Zahlen erfolgte gemäß der Vorschrift der DIN 53240-2 (2007-11). Die Alkalizahl des Alkalimetallalkoxylats wurde bestimmt nach ASTM D 4662-87. Die Bestimmung der Wassergehalte erfolgte nach Karl Fischer gemäß der Vorschrift der ASTM D 4672 - 91.

Eingesetzte Rohstoffe

IRGANOX 1076: Octadecyl-3-(3,5-di-tert.butyl-4-hydroxyphenyl)propionat

Herstellung des Alkalimetallalkoxylats eines glyceringestarteten Polyoxyalkylenpolyols in Schritt i-1):

878,8 g Glycerin und 39,7 g einer wässrigen KOH-Lösung (enthaltend 45 Gew.-% KOH) wurden bei 60 °C in einem 10 l Autoklaven zusammengegeben. Unter Rühren (450 U / min) wurde bei 115 °C im Vakuum entwässert, bis ein Druck kleiner 10 mbar erreicht war. Bei 115 °C wurden sodann 5121,2 g Propylenoxid als erste Teilmenge (A-1) des Alkylenoxids (A) so eindosiert, dass ein Gesamtdruck von 3 bar nicht überschritten wurde. Nach einer Nachreaktionszeit von 150 min. bei 115 °C wurde das Reaktionsgemisch bei ebenfalls 115 °C 30 min. im Vakuum ausgeheizt. Der Reaktorinhalt wurde auf 80 °C abgekühlt und es wurden 583,4 g einer wässrigen KOH-Lösung (enthaltend 45 Gew.-% KOH) als weiterer basischer Katalysator (C-1) zugegeben. Es wurde im Vakuum bei 110 °C entwässert, bis ein Druck kleiner 10 mbar erreicht war. Das erhaltene Alkalimetallalkoxylat eines glyceringestarteten Polyoxyalkylenpolyols hatte eine Alkalizahl von 45,6 mg KOH/g und eine OH-Zahl von 253,2 mg KOH / g.

Beispiel 1 (Vergleich):

In einen 2 l Laborautoklaven wurden unter Stickstoffatmosphäre 90,5 g des Alkalimetallalkoxylats des glyceringestarteten Polyoxyalkylenpolyols aus Schritt i-1) gegeben und der Autoklav wurde verschlossen. Sauerstoff wurde bei Raumtemperatur durch 5-maliges Beaufschlagen des Autoklaven mit Stickstoff bis zu einem Absolutdruck von 3 bar und anschließendes Evakuieren auf 15 mbar entfernt. Der Inhalt des Autoklaven wurde unter Rühren (Kreuzbalkenrührer, 800 U / min) auf 115 °C erwärmt. Bei 115 °C wurden in Schritt i-2) 982,4 g Propylenoxid (Alkylenoxid (A-2)) über einen Zeitraum von 3,93 h in den Kopfraum des Reaktors dosiert. Nach einer ersten Nachreaktionsphase bei 115 °C von 3,26 h Dauer, in der der Reaktordruck von 4,3 auf 1,5 bar abfiel, erhielt man Intermediat (D). Die Temperatur wurde auf 130 °C erhöht und es wurden 130,7 g Ethylenoxid (Alkylenoxid (F)) in Schritt iii) über einen Zeitraum von 0,53 h in den Kopfraum des Reaktors in Schritt iii) dosiert. Nach einer zweiten Nachreaktionsphase von 1,02 h Dauer bei 130 °C, in der der Reaktordruck von 2,5 bar auf 1,8 bar abfiel, wurde der Inhalt des Autoklaven bei 130 °C über einen Zeitraum von 33 min. im Vakuum (17 mbar) ausgeheizt, wobei das alkalische Polyetherpolyol (H-1) erhalten wurde. Nach Abkühlen auf 80 °C wurden 120 ml destilliertes Wasser, 30,59 g einer 12,14 gew.-%igen Lösung von Schwefelsäure in Wasser und 0,646 g IRGANOX 1076 in Schritt iv) zugegeben und die entstandene Emulsion wurde 30 min. gerührt. Von dieser Emulsion wurden 793,6 g in einen Glasreaktor mit Doppelmantelheizung und Rühraggregat überführt und es wurden 79 ml destilliertes Wasser zugegeben. Man rührte bei 80 °C für weitere 30 min. Der Rührer wurde abgestellt und man ließ den Reaktorinhalt bei 80 °C für 24 h stehen. Nach Ablauf der 24 h ließen sich 101,3 g einer unteren (wässrigen) Phase und 758,8 g einer oberen (vorwiegend polyetherhaltigen) Phase isolieren, was einem Gewichtsverhältnis der wässrigen Phase zur Polyetherpolyolphase von 1 zu 7,49 entspricht. Der Wassergehalt in der oberen Polyetherpolyolphase betrug 5,5 Gew.-%.

Beispiel 2 (erfinderisch):

In einen 2 l Laborautoklaven wurden unter Stickstoffatmosphäre 90,0 g des Alkalimetallalkoxylats des glyceringestarteten Polyoxyalkylenpolyols aus Schritt i-1) gegeben und der Autoklav wurde verschlossen. Sauerstoff wurde bei Raumtemperatur durch 5-maliges Beaufschlagen des Autoklaven mit Stickstoff bis zu einem Absolutdruck von 3 bar und anschließendes Evakuieren auf 70 mbar entfernt. Der Inhalt des Autoklaven wurde unter Rühren (Kreuzbalkenrührer, 800 U / min) auf 115 °C erwärmt. Bei 115 °C wurden in Schritt i-2) 982,4 g Propylenoxid (Alkylenoxid (A-2)) über einen Zeitraum von 3,95 h in den Kopfraum des Reaktors dosiert. Nach einer ersten Nachreaktionsphase bei 115 °C von 4,0 h Dauer, in der der Reaktordruck von 4,0 bar auf 1,4 bar abfiel, erhielt man Intermediat (D). Der Reaktorinhalt wurde in Schritt ii) bei 115 °C über einen Zeitraum von 4 h durch Einleiten von 50 ml Stickstoff / min bei gleichzeitig angelegtem Vakuum gestrippt. Hierbei stellte sich ein Druck von 140 mbar ein und man erhielt Intermediat (E). Sodann wurde die Temperatur auf 130 °C erhöht, der Reaktordruck mit Stickstoff auf 2,7 bar eingestellt und es wurden in Schritt iii) 130,6 g Ethylenoxid (Alkylenoxid (F)) über einen Zeitraum von 0,53 h in den Kopfraum des Reaktors dosiert. Nach einer zweiten Nachreaktionsphase von 1,0 h Dauer bei 130 °C, in der der Reaktordruck von 3,7 bar auf 3,1 bar abfiel, wurde der Inhalt des Autoklaven bei 130 °C über einen Zeitraum von 33 min. im Vakuum (17 mbar) in Schritt iv) ausgeheizt, wobei das alkalische Polyoxyalkylenpolyol (H-1) erhalten wurde. Nach Abkühlen auf 80 °C wurden 120 ml destilliertes Wasser, 30,39 g einer 12,14 gew.-%igen Lösung von Schwefelsäure in Wasser und 0,639 g IRGANOX 1076 in Schritt v) zugegeben und die entstandene Emulsion wurde 30 min. gerührt. Von dieser Emulsion wurden 763,0 g in einen Glasreaktor mit Doppelmantelheizung und Rühraggregat überführt und es wurden 76 ml destilliertes Wasser zugegeben. Man rührte bei 80 °C für weitere 30 min. Der Rührer wurde abgestellt und man ließ den Reaktorinhalt bei 80 °C für 24 h stehen. Nach Ablauf der 24 h ließen sich 108,0 g einer unteren (wässrigen) Phase und 725,0 g einer oberen (vorwiegend polyetherhaltigen) Phase isolieren, was einem Gewichtsverhältnis der wässrigen Phase zur Polyetherpolyolphase von 1 zu 6,71 entspricht.. Der Wassergehalt in der oberen Polyetherpolyolphase betrug 5,1 Gew.-%.

Beispiel 3 (Vergleich):

In einen 10 l Laborautoklaven wurden unter Stickstoffatmosphäre 449,9 g des Alkalimetallalkoxylats des glyceringestarteten Polyoxyalkylenpolyols aus Schritt i-1) gegeben und der Autoklav wurde verschlossen. Sauerstoff wurde bei Raumtemperatur durch 5-maliges Beaufschlagen des Autoklaven mit Stickstoff bis zu einem Absolutdruck von 3 bar und anschließendes Evakuieren auf 15 mbar entfernt. Der Inhalt des Autoklaven wurde unter Rühren (Gitterrührer, 450 U / min) auf 115 °C erwärmt. Bei 115 °C wurden in Schritt i-2) 4911,8 g Propylenoxid (Alkylenoxid (A-2)) über einen Zeitraum von 4,75 h in den Kopfraum des Reaktors dosiert. Nach einer ersten Nachreaktionsphase bei 115 °C von 0,5 h Dauer, in der der Reaktordruck von 4,6 bar auf 2,8 bar abfiel, erhielt man Intermediat (D). Die Temperatur wurde in Schritt iii) bei 115 °C belassen und es wurden 653,6 g Ethylenoxid (Alkylenoxid (F)) über einen Zeitraum von 0,53 h in den Kopfraum des Reaktors dosiert. Nach einer zweiten Nachreaktionsphase bei 115 °C von 1,0 h Dauer, in der der Reaktordruck von 3,2 bar auf 1,9 bar abfiel, wurde der Inhalt des Autoklaven bei 130 °C über einen Zeitraum von 30 min. im Vakuum (17 mbar) ausgeheizt, wobei das alkalische Polyoxyalkylenpolyol (H-1) erhalten wurde. Nach Abkühlen auf 80 °C wurden 600 ml destilliertes Wasser, 147,90 g einer 12,47 gew.-%igen Lösung von Schwefelsäure in Wasser und 3,019 g IRGANOX 1076 in Schritt iv) zugegeben und die entstandene Emulsion wurde 30 min. gerührt. Von dieser Emulsion wurden 758,9 g in einen Glasreaktor mit Doppelmantelheizung und Rühraggregat überführt und es wurden 75 ml destilliertes Wasser zugegeben. Man rührte bei 80 °C für weitere 30 min. Der Rührer wurde abgestellt und man ließ den Reaktorinhalt bei 80 °C für 24 h stehen. Nach Ablauf der 24 h ließen sich 733,0 g einer oberen (vorwiegend polyetherhaltigen) Phase isolieren. Der Wassergehalt in dieser oberen Polyetherpolyolphase betrug 7,6 Gew.-%.

Beispiel 4 (Vergleich):

In einen 2 l Laborautoklaven wurden unter Stickstoffatmosphäre 90,2 g des Alkalimetallalkoxylats des glyceringestarteten Polyoxyalkylenpolyols aus Schritt i-1) gegeben und der Autoklav wurde verschlossen. Sauerstoff wurde bei Raumtemperatur durch 5-maliges Beaufschlagen des Autoklaven mit Stickstoff bis zu einem Absolutdruck von 3 bar und anschließendes Evakuieren auf 20 mbar entfernt. Der Inhalt des Autoklaven wurde unter Rühren (Kreuzbalkenrührer, 800 U / min) auf 115 °C erwärmt. Bei 115 °C wurden in Schritt i-2) 982,4 g Propylenoxid (Alkylenoxid (A-2)) über einen Zeitraum von 3,97 h in den Kopfraum des Reaktors dosiert. Nach einer ersten Nachreaktionsphase bei 115 °C von 4 h Dauer, in der der Reaktordruck von 4,2 bar auf 1,5 bar abfiel, wurde Intermediat (D) erhalten. Die Temperatur wurde auf 130 °C erhöht, der Reaktordruck mit Stickstoff auf 2,5 bar eingestellt und es wurden in Schritt iii) 130,6 g Ethylenoxid (Alkylenoxid (F)) über einen Zeitraum von 0,52 h in den Kopfraum des Reaktors dosiert. Nach einer zweiten Nachreaktionsphase bei 130 °C von 1,05 h Dauer, in der der Reaktordruck von 3,4 bar auf 2,7 bar abfiel, wurde der Inhalt des Autoklaven bei 130 °C in Schritt iv) über einen Zeitraum von 48 min. im Vakuum (17 mbar) ausgeheizt, wobei das alkalische Polyetherpolyol (H) erhalten wurde. Nach Abkühlen auf 80 °C wurden 726,5 des alkalischen Polyetherpolyols (H) in einen Glasreaktor mit Doppelmantelheizung und Rühraggregat überführt und es wurden 162 ml destilliertes Wasser in Schritt v) zugegeben. Man rührte bei 80 °C für weitere 30 min. Der Rührer wurde abgestellt und man ließ den Reaktorinhalt bei 80 °C für 24 h stehen. Nach Ablauf der 24 h ließen sich 0,5 g einer unteren (wässrigen) Phase und 877,0 g einer oberen (vorwiegend polyetherhaltigen) Phase isolieren, was einem Gewichtsverhältnis der wässrigen Phase zur Polyetherpolyolphase von 1 zu 1754 entspricht.. Der Wassergehalt in der oberen Polyetherpolyolphase betrug 14,4 Gew.-%.

Beispiel 5 (erfinderisch):

In einen 2 1 Laborautoklaven wurden unter Stickstoffatmosphäre 90,5 g des Alkalimetallalkoxylats des glyceringestarteten Polyoxyalkylenpolyols aus Schritt i-1) gegeben und der Autoklav wurde verschlossen. Sauerstoff wurde bei Raumtemperatur durch 5-maliges Beaufschlagen des Autoklaven mit Stickstoff bis zu einem Absolutdruck von 3 bar und anschließendes Evakuieren auf 30 mbar entfernt. Der Inhalt des Autoklaven wurde unter Rühren (Kreuzbalkenrührer, 800 U / min) auf 115 °C erwärmt. Bei 115 °C wurden in Schritt i-2) 982,4 g Propylenoxid (Alkylenoxid (A-2)) über einen Zeitraum von 3,93 h in den Kopfraum des Reaktors dosiert. Nach einer Nachreaktionsphase bei 115 °C von 4 h Dauer, in der der Reaktordruck von 3,9 bar auf 1,4 bar abfiel wurde Intermediat (D)) erhalten. Der Reaktorinhalt wurde bei 115 °C in Schritt ii) über einen Zeitraum von 5 h durch Einleiten von 50 ml Stickstoff / min bei gleichzeitig angelegtem Vakuum gestrippt, wobei Intermediat (E) erhalten wurde. Hierbei stellte sich ein Druck von 40 mbar ein. Sodann wurde die Temperatur auf 130 °C erhöht und es wurden in Schritt iii) 133,2 g Ethylenoxid (Alkylenoxid (F)) über einen Zeitraum von 0,57 h in den Kopfraum des Reaktors dosiert. Nach einer zweiten Nachreaktionsphase bei 130 °C von 1,0 h Dauer, in der der Reaktordruck von 1,6 bar auf 0,3 bar abfiel, wurde der Inhalt des Autoklaven bei 130 °C über einen Zeitraum von 30 min. im Vakuum (20 mbar) ausgeheizt und man erhielt das alkalische Polyoxyalkylenpolyol (H-1). Nach Abkühlen auf 80 °C wurden 704,0 des des alkalischen Polyetherpolyols (H) in einen Glasreaktor mit Doppelmantelheizung und Rühraggregat überführt und es wurden 157 ml destilliertes Wasser in Schritt iv) zugegeben. Man rührte bei 80 °C für weitere 30 min. Der Rührer wurde abgestellt und man ließ den Reaktorinhalt bei 80 °C für 24 h stehen. Nach Ablauf der 24 h ließen sich 110,0 g einer unteren (wässrigen) Phase und 740,0 g einer oberen (vorwiegend polyetherhaltigen) Phase isolieren, was einem Gewichtsverhältnis der wässrigen Phase zur Polyetherpolyolphase von 1 zu 6,73 entspricht. Der Wassergehalt in der oberen Polyetherpolyolphase betrug 5,4 Gew.-%.

Tabelle 1: Zusammenfassung der Ergebnisse

| Beispiel | Gew.-Verhältnis wässrige Phase (J-2) / Polyetherpolyolphase (J-1) | Wassergehalt in Polyetherpolyolphase [%] |
|---|---|---|
| 1 (Vergl.) | 1 / 7,49 | 5,5 |
| 2 (erf.) | 1 / 6,71 | 5,1 |
| 3 (Vergl.) | nicht bestimmt | 7,6 |
| 4 (Vergl.) | 1 / 1754 | 14,4 |
| 5 (erf.) | 1 / 6,73 | 5,4 |

**Patentansprüche**

1.  Verfahren zur Herstellung eines Polyoxyalkylenpolyols, bevorzugt eines Polyetherpolyols umfassend folgende Schritte:

    i) Anlagerung eines Alkylenoxids (A) an eine H-funktionelle Startersubstanz (B) in Gegenwart eines basischen Katalysators (C) unter Bildung eines Intermediats (D),
    ii) Vakuumbehandlung des Intermediats (D) bei Drücken von 1 mbara bis 500 mbara, bevorzugt von 2 mbara bis 200 mbara, und besonders bevorzugt von 2 mbara bis 50 mbara unter Bildung eines Intermediats (E),
    iii) Anlagerung eines Alkylenoxids (F) an das Intermediat (E) optional in Gegenwart eines basischen Katalysators (G) unter Bildung eines alkalischen Polyoxyalkylenpolyols (H), bevorzugt eines alkalischen Polyetherpolyols (H-1),
    iv) Optional Vakuumbehandlung des alkalischen Polyoxyalkylenpolyols (H), bevorzugt des alkalischen Polyetherpolyols (H-1) bei Drücken von 1 mbara bis 500 mbara, bevorzugt von 2 mbara bis 200 mbara, und besonders bevorzugt von 2 mbara bis 50 mbara,
    v) Zugabe von Wasser und optional einer Säure (I) zu dem alkalischen Polyoxyalkylenpolyol (H), bevorzugt zum alkalischen Polyetherpolyol (H-1) unter Bildung einer Mischung (J) umfassend eine erste Phase (J-1) enthaltend das Polyoxyalkylenpolyol und eine zweite, wässrige Phase (J-2),

vi) Abtrennung der zweiten, wässrigen Phase (J-2) von der ersten Phase (J-1) enthaltend das Polyoxyalkylenpolyol über Gravitation,

wobei die Zugabe des Alkylenoxids (A) in Schritt i) zeitlich vor der Vakuumbehandlung in Schritt ii) beendet wird und die Zugabe des Alkylenoxids (F) zeitlich erst nach Abschluss der Vakuumbehandlung in Schritt ii) beginnt.

2. Verfahren gemäß Anspruch 1, wobei das Alkylenoxid (A) Propylenoxid oder ein Gemisch aus Ethylenoxid und Propylenoxid mit bis zu 30 Massen-% Ethylenoxid bezogen auf die Gesamtmasse des Gemisches aus Ethylenoxid und Propylenoxid des Alkylenoxids (A) ist.

3. Verfahren gemäß Anspruch 1 oder 2, wobei der basische Katalysator (C) ein Alkalimetallhydroxid bevorzugt Natriumhydroxid und/oder Kaliumhydroxid ist.

4. Verfahren gemäß einem der Ansprüche 1 bis 3, wobei Schritt i) folgende Unterschritte umfasst:

i-1) Anlagerung einer ersten Teilmenge (A-1) des Alkylenoxids (A) an das Polyetherpolyol und/oder den mehrfunktioneller Alkohol als H-funktionelle Startersubstanz (B) in Gegenwart des Alkalimetallhydrids, des Alkalimetallcarboxylats und/oder des Alkalimetallhydroxids bevorzugt des Alkalimetallhydroxids als basischem Katalysator (C) unter Bildung eines Alkalimetallalkoxylats,

i-2) Umsetzung des Alkalimetallalkoxylats mit der einer zweiten Teilmenge (A-2) des Alkylenoxids (A) unter Bildung des Intermediats (D).

5. Verfahren gemäß einem der Ansprüche 1 bis 4, wobei zwischen den Schritten i) und ii) keine Wasserzugabe und/oder Säurezugabe erfolgt.

6. Verfahren gemäß einem der Ansprüche 1 bis 5, wobei nach der Beendigung der Zugabe des Alkylenoxids (A) in Schritt i) und vor der Vakuumbehandlung in Schritt ii) das Intermediat (D) bei einer Temperatur bei einer Temperatur von 80 °C bis 150 °C, bevorzugt von 80 °C bis 115 °C und einem Druck von 0,01 bara bis 10 bara, bevorzugt von 0,1 bara bis 7 bara in einer ersten Nachreaktionsphase behandelt wird.

7. Verfahren gemäß einem der Ansprüche 1 bis 6, wobei die Vakuumbehandlung in Schritt ii) bei Temperaturen von 20 bis 200 °C, bevorzugt bei 50 bis 160 °C, besonders bevorzugt bei 100°C bis 150°C durchgeführt wird.

8. Verfahren gemäß einem der Ansprüche 1 bis 7, wobei die Vakuumbehandlung in Schritt ii) über einen Zeitraum von 5 min bis 6 h, bevorzugt von 10 min bis 4 h und besonders bevorzugt von 10 min bis 2 h durchgeführt wird.

9. Verfahren gemäß einem der Ansprüche 1 bis 8, wobei die Vakuumbehandlung in Schritt ii) unter Einleiten von Inertgasen und/oder Wasserdampf, bevorzugt Stickstoff unter den Flüssigkeitsspiegel in das Intermediat (D) erfolgt.

10. Verfahren gemäß Anspruch 9, wobei das Einleiten der Inertgase und/oder Wasserdampf, bevorzugt Stickstoff, in Mengen von 1 mL/(min kg (Intermediat (D))) bis 50 mL/(min kg (Intermediat (D))) bevorzugt von 3 mL/(min kg (Intermediat (D))) bis 30 mL/(min kg (Intermediat (D))) unter den Flüssigkeitsspiegel des Intermediats (D) erfolgt.

11. Verfahren gemäß einem der Ansprüche 1 bis 10, wobei das Alkylenoxid (F) Ethylenoxid oder ein Gemisch aus Ethylenoxid und Propylenoxid mit mindestens 70 Massen-% Ethylenoxid bezogen auf die Gesamtmasse des Gemisches aus Ethylenoxid und Propylenoxid des Alkylenoxids (F) ist.

12. Verfahren gemäß einem der Ansprüche 1 bis 11, wobei nach der Beendigung der Zugabe des Alkylenoxids (F) in Schritt iii) das alkalische Polyoxyalkylenpolyol (H), bevorzugt das alkalische Polyetherpolyol (H-1) bei einer Temperatur von 80 °C bis 170 °C, bevorzugt von 80 °C bis 150 °C und einem Druck von 0,01 bara bis 10 bara, bevorzugt von 0,1 bara bis 7 bara in einer zweiten Nachreaktionsphase behandelt wird.

13. Verfahren gemäß einem der Ansprüche 1 bis 12, wobei in Schritt v) das alkalische Polyoxyalkylenpolyol (H), bevorzugt das alkalische Polyetherpolyol (H-1) durch Zugabe von Wasser und die Säure (I) neutralisiert wird unter Bildung der Mischung (J) umfassend die erste Phase (J-1) enthaltend das Polyoxyalkylenpolyol und eine zweite wässrige Phase (J-2) enthaltend ein Neutralisationssalz.

14. Verfahren gemäß einem der Ansprüche 1 bis 13, wobei nach dem Schritt vi) in Schritt vii) das Wasser aus der ersten Phase (J-1) enthaltend das Polyoxyalkylenpolyol abgetrennt wird.

15. Mischung (J) umfassend eine erste Phase (J-1) enthaltend das Polyoxyalkylenpolyol und eine zweite, wässrige Phase (J-2), bevorzugt enthaltend ein Neutralisationssalz erhältlich nach dem Verfahren gemäß einem der Ansprüche 1 bis 14.

Europäisches
Patentamt

European
Patent Office

Office européen
des brevets

## EUROPÄISCHER RECHERCHENBERICHT

**Nummer der Anmeldung**

EP 23 18 1155

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 3 747 929 A1 (JIAHUA CHEMISTRY BINZHOU CO LTD [CN] ET AL.)<br>9. Dezember 2020 (2020-12-09)<br>* Beispiele *<br>----- | 15 | INV.<br>C08G65/26 |
| X | DD 144 272 A1 (SCHIMPFLE HANS ULRICH; WAGNER GUENTER ET AL.)<br>8. Oktober 1980 (1980-10-08)<br>* das ganze Dokument *<br>----- | 1-15 | |

RECHERCHIERTE
SACHGEBIETE (IPC)

C08G

Der vorliegende Recherchenbericht wurde für alle Patentansprüche erstellt

| Recherchenort | Abschlußdatum der Recherche | Prüfer |
|---|---|---|
| Den Haag | 29. August 2023 | Hoffmann, Michael |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-08-2023

| Im Recherchenbericht angeführtes Patentdokument | Datum der Veröffentlichung | Mitglied(er) der Patentfamilie | | Datum der Veröffentlichung |
|---|---|---|---|---|
| EP 3747929 A1 | 09-12-2020 | CN | 109575268 A | 05-04-2019 |
| | | EP | 3747929 A1 | 09-12-2020 |
| | | RU | 2752757 C1 | 02-08-2021 |
| | | US | 2021275941 A1 | 09-09-2021 |
| | | WO | 2020088632 A1 | 07-05-2020 |
| DD 144272 A1 | 08-10-1980 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3747929 A1
- DD 144272
- US 3823145 A
- WO 2021198054 A1
- EP 2028211 A
- WO 2009106244 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- DE 1202785 B
- US 3401190 A
- DE 19627907 A
- DE 19628145 A
- DE 19509819 A
- GB 874430 A
- GB 848671 A
- US 3454606 A
- US 3277138 A
- US 3152162 A
- DE 25044002537685 A
- DE 2552350 A
- US 3492301 A
- GB 994890 A
- BE 761626 B
- NL 7102524 A
- US 30019731 A

- DE 10227891222067 C
- DE 1027394 C
- DE 1929034 A
- DE 2004048 A
- BE 752261 B
- US 3394164 A
- US 3644457 A
- DE 1230778 C
- US 3124605 A
- US 3201372 A
- GB 889050 B
- US 3654106 A
- GB 965474 B
- GB 1072956 B
- US 3567763 A
- DE 1231688 C
- DE 1072385 C
- US 3455883 A
- DE 2624527 A
- DE 2624528
- DE 2636787 A
- DE 1720633 A
- US 3330782 A
- DE 1030558 B
- DE 1804361 A
- DE 2618280 A
- DE 2523633 A
- DE 2732292 A
- US 3620984 A
- US 3645927 A
- US 2834748 A
- US 2917480 A
- US 3629308 A
- DE 2558523 A

**In der Beschreibung aufgeführte Nicht-Patentliteratur**

- **M. IONESCU et al.** *Advances in Urethanes Science and Technology*, 1998, vol. 14, 151-218
- Ullmann's Encyclopedia of Industrial Chemistry. 1992, vol. B4, 167
- z. B. Handbuch Apparate. Vulkan-Verlag Essen, 1990, 188-208
- **W. SIEFKEN**. *Justus Liebigs Annalen der Chemie*, vol. 562, 75-136

- Kunststoff-Handbuch. Carl-Hanser-Verlag, 1966, vol. VII, 108, 453, 507-510
- The Polyurethanes Book. John Wiley & Sons, Ltd., 2002, 127-136, 232-233, 261
- Kunststoff-Handbuch. Carl-Hanser-Verlag, 1993, vol. VII, 113-115
- Kunststoff-Handbuch. Carl-Hanser-Verlag, 1966, vol. VII, 103-113